(19) Europäisches Patentamt / European Patent Office / Office européen des brevets

(11) **EP 3 057 005 A1**

(12) **EUROPEAN PATENT APPLICATION**

(43) Date of publication:
**17.08.2016 Bulletin 2016/33**

(51) Int Cl.:
***G06F 17/30*** *(2006.01)* ***G06Q 50/16*** *(2012.01)*

(21) Application number: **15154930.0**

(22) Date of filing: **12.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Duault, Maurice**
**06800 Cagnes sur Mer (FR)**

(72) Inventor: **Duault, Maurice**
**06800 Cagnes sur Mer (FR)**

(74) Representative: **Schuffenecker, Thierry**
**120 Chemin de la Maure**
**06800 Cagnes sur Mer (FR)**

(54) **Process for computing a score for a search engine used for accessing a database of real estate properties**

(57)     A process for computing a score for a search engine of a web server accessing to at least one database (108) of real estate properties offered for sale or for rent. The process involves the steps of generating a demand profile dedicated to a possible user, with the demand profile comprising a first explicit demand profile and a second implicit demand profile. The first explicit demand profile comprising data input by the user through a user interface, with the data including classified data corresponding to n classes to be assigned to a set of criteria describing a particular property. The second implicit demand profile comprising data including rated data corresponding to ratings or soft values to be assigned to each of said criteria, said soft values being iteratively updated from data generated from the user's navigation.

In addition to the demand profile, the process further generates a supply profile comprising a first explicit supply profile comprising data input by the property owner and including classified data corresponding to the said classes and a second implicit supply profile comprising data including rated data corresponding to soft values to be assigned to each of said criteria, with the soft values being iteratively updated from data received from evaluations.

A score is generated between a particular implicit demand profile and a particular implicit supply profile indicative of the probability of a possible transaction between a possible purchaser and a property owner.

Fig.1A

## Description

### Technical field

The invention relates to the field of search engines and more particularly to a process for computing a score for a search engine dedicated to a web server operating on database in the real estate business.

### Background Art

Web sites dedicated to real estate business are well present over the Internet network, and allow possible property purchasers, as well as applicants for rent, to be connected to sellers or landlords having a property to offer for sale or for rent.

Generally speaking, search web sites are developed as large listings which are indexed in accordance with some criteria (size of the house for sale, price, location etc...).

The examination of those long lists of properties might become a burden requiring quite a long time and leaving, eventually, most users (generally the possible purchaser) exhausted by the endless listings of photos, abstracts etc ... listed on the different web sites.

For the purpose of reducing the number of listings, or alternatively for the purpose of providing a list of reduced size which only displays properties being of high relevance to the user, the latter must be precisely aware of what he is looking for. However, some property purchasers often think that they have very few key preferences and are simply not aware of what they can expect or need to visit a lot of properties offered for sale before they get a clear view of the particular house/flat which would fit their expectations.

Most of those property buyers rely on the expertise of real estate agents who have developed a significant experience in asking questions to the buyers for the purpose of determining their conscious needs and unconscious wishes.

However, despite the huge experience and skill some agents may have developed, the determination of the internal conscious and unconscious desires of a possible purchaser always remain a tricky task requiring a long time until the real estate agency may have a clear understanding of his client's wishes.

Therefore, a first problem to be solved by the present invention is to automate as much as possible the search engine process so that the web server can display a list of properties for sale which are of highly relevance for a possible purchaser, even when the latter did not formalized all his wishes into a computerized template or, simply, when he is not perfectly aware of his wishes and needs.

Conventional systems known in the art are not adapted for providing a solution to such a problem.

In such a conventional real estate search system, when the possible buyer or renter searches a property offered for sale, the system usually proposes search criteria with binary logic: the criterion is either met or not met.

It has been found that such approach has the following drawbacks when the search system stores a large number of listings:

- A large number of binary criteria hides interesting listings.
- A small number of binary criteria produces a very large number of unqualified listings
- The listings are not rated and the buyer needs to evaluate all of them

When the seller publishes a listing, he has difficulty to evaluate the fair market price, the interest of the market for his property and the number of potential buyers. The adjustment of the price of the property might take quite a long time until the seller finally finds a buyer. When the seller adjusts his price, he needs focused advertisement to warn the potential buyers. He may also spend a lot of time to organize unqualified visits.

Therefore, a second problem to solve is to provide a search engine process which allows high adaptation to the different needs and wishes of the purchaser, even when those are not perfectly formalized.

A third problem is to provide a system which is adapted to the profession of real estate agencies, which need to offer to their clients differentiated value added services, and control the access of his customers in private or public domains.

Such problems are solved by the present invention.

### Summary of the invention

It is an object of the present invention to provide a new real estate search mechanism that reduces the workload on the users accessing web servers operating in the real estate business, particularly with respect to the workload required for precisely defining their expectations and wishes.

It is another object of the present invention to provide a new scoring process usable for a search engine which allows a possible purchaser to be efficiently connected to a real estate property which is offered for sale.

It is an object of the present invention to provide the architecture of a search engine dedicated to the real estate business that achieves efficient relationship between possible purchasers and property owners.

It is a further object of the present invention to provide a scoring process to be used in the real estate business for the purpose of providing an efficient mechanism of selection of a list of properties to be displayed to a user of the system, who is a possible purchaser.

It is still another object of the present invention to provide a search engine process that minimizes the burden on the users - possible purchaser - by giving the possibility of having a demand profile be automatically generated in an iterative fashion even when such user does not wish to leave any data for initiating such profile.

It is another object of the present invention to provide a score process which generates, for a user exploring a web site dedicated to real business, a score which may be used as an interesting evaluation of the probability of a transaction between the user and a property owner.

It is still another object of the present invention to achieve a score system for a real estate web server which allows the possibility to introduce one particular property within a database of property offered for sale, and which further generates a list of possible purchasers having their own profiles matching the profile of the property.

Conversely, it is a further object of the present invention to achieve a scoring system for a real estate search engine which achieves the possibility, for a user registering his profile, to be provided with a list of properties and listings having the highest scores matching his own profile.

It is another object of the present invention to carry out a scoring process for a web server dedicated to real estate business, which greatly facilitates the tracking of the surfing of the user and allows numerous statistical computations on the different criteria which are of interest for a possible purchaser.

It is still another object of the present invention to carry out a process for computing a score between two separate profiles, a first demand profile dedicated to a project of a possible purchaser and a supply profile dedicated to a particular property offered for sale or for rent by a property owner.

These and other objects of the invention are achieved by means of a process for computing a score for a search engine of a web server accessing to at least one database (108) of real estate properties offered for sale or for rent. The process involves the steps of generating a demand profile dedicated to a possible user or property purchaser, with the demand profile comprising a first explicit demand profile and a second implicit demand profile. The first explicit demand profile comprising data input by the property purchaser or user through a user interface, said data including classified data corresponding to n classes, wherein n is an integer comprised between [2, 10], to be assigned to a set of criteria describing a particular property. The second implicit demand profile comprising data including rated data corresponding to ratings or soft values to be assigned to each of said criteria, said soft values being iteratively updated from data generated from the user's navigation.

In addition to the demand profile, the process further generates a **supply** profile dedicated to a property which is offered for sale.

The supply profile further comprises a first explicit supply profile comprising data input by the property owner, said data including classified data corresponding to m classes wherein m is an integer comprised between [2, 10], and a second implicit supply profile comprising data including rated data corresponding to said ratings or soft values to be assigned to each of said criteria, said soft values being iteratively updated from data received from evaluations.

A score is generated between a particular implicit demand profile and a particular implicit supply profile indicative of the probability of a possible transaction between a possible purchaser and a property owner.

In one particular embodiment, the first explicit demand profile and the second explicit supply profile are populated with data generated by a graphical user interface providing a set of criteria which can be classified in different categories by the user.

Preferably, the graphical user interface involves the step of:

- providing a set of photos or icons, wherein each photo or icon is dedicated to one particular criterion,
- providing a set of n areas or zones, wherein each area or zone is dedicated to one particular class among said n classes; wherein the user may drag and drop each photo or icon in one particular area so as to assign the corresponding class to said criterion

In one particular embodiment, the user may use a graphical interface comprising said n areas filled with one or more photos or icons, and that said second implicit demand profile is displayed to the user.

Preferably, the classes are automatically updated in accordance with the update of the corresponding soft values.

In one embodiment, the score is used for computing an estimation of the time for achieving a transaction.

In one embodiment, one class assigned to one particular criterion can be subject of a freeze by said user, independently of the continuous update of the corresponding soft value.

- In one particular embodiment, the process involves the steps of: defining an association tactic to address a market segment, said association tactic is a set of supply and demand criteria associations;
- computing for each criterion an intermediate score value from the soft values stored within the two implicit demand and supply profiles;
- deriving from said intermediate scores value a global score value which is representative of the probability of a transaction between the user and the property owner.

The invention also provides a web server as well as a computer program product for carrying out the process.

**Description of the drawings**

Other features of one or more embodiments of the invention will appear from the following description of embodiments of the invention, with reference being made to the accompanying drawings.

**FIG.1a** is an illustrative diagram showing the principle of demand profile learning loop for enriching the demand profile of possible purchaser.

**FIG.1b** is a is a block diagram of a preferred embodiment of the present invention, illustrating the network configuration of the scoring system

**FIG.2** is a block diagram illustrating the scoring model

**FIG.3a** is a block diagram of supply user steps

**FIG.3b** is a block diagram of demand user steps

**FIG.4** is a block diagram illustrating profile factors and criteria

**FIG.5** is a block diagram illustrating profile management tables

**FIG.6a** is a block diagram illustrating a list of explicit supply profile unrated criteria and parameters

**FIG.6b** is a block diagram illustrating a list of explicit supply profile rated criteria

**FIG.6c** is a block diagram illustrating an explicit supply profile control and a supply profile evaluation

**FIG.7** is a block diagram illustrating a list of weights associated to supply profile update types.

**FIG.8** is a block diagram illustrating a renovation cost criterion operation function of time since last significant renovation

**FIG.9** is a block diagram illustrating a low charges criterion operation function of annual charges

**FIG.10** is a block diagram illustrating a new property criterion operation function of year built

**FIG.11a** is a block diagram illustrating a list of explicit demand profile unrated criteria

**FIG.11b** is a block diagram illustrating a list of explicit demand profile rated criteria

FIG.11c is a block diagram illustrating an explicit demand profile control and a demand profile evaluation

**FIG.12** is a block diagram illustrating a list of weights associated to demand profile update types.

**FIG.13** is a block diagram of search steps

**FIG.14** is a block diagram illustrating a rated supply rated demand criteria score operation function of supply/demand ratio

**FIG.15** is a block diagram illustrating a numeric supply numeric demand criterion score operation function of the supply value

**FIG.16** is a block diagram illustrating a budget criterion score operation function of the supply / demand ratio

**FIG.17** is a block diagram illustrating a location criterion score operation function of the distance

**FIG.18a** is a block diagram illustrating a criterion confidence operation function of the sum of weights of events and standard deviation

**FIG.18b** is a block diagram illustrating a profile confidence operation function of the available transaction weights ratio

**FIG.19** is a block diagram illustrating a market indicator operation function of the supply, the demand and the position

**FIG.20** is a block diagram illustrating an estimated time of transaction operation function of the supply, the demand and the position

**FIG.21a** is a block diagram illustrating a pricing operation function of a positive pricing criterion

**FIG.21b** is a block diagram illustrating a pricing operation function of a negative pricing criterion

**FIG.21c** is a block diagram illustrating a pricing operation function of a mixed pricing criterion

**FIG.21d** is a block diagram illustrating an estimated pricing operation function of living size criterion

**FIG.22a** is a block diagram illustrating an estimated pricing function of average criteria contributions

**FIG.22b** is a block diagram illustrating an estimated pricing function of defect criteria contributions

**FIG.22c** is a block diagram illustrating an estimated pricing function of Market Indicator

## Description of the preferred embodiment

There will now be described an improvement which is provided to the known technique for advertising real estate properties and, more generally, for development web servers dedicated to the real estate business.

Generally speaking, the concepts of database, web server operating on the internet network, navigation or surfing through a navigator are well known to a skilled man and will not be further elaborated on.

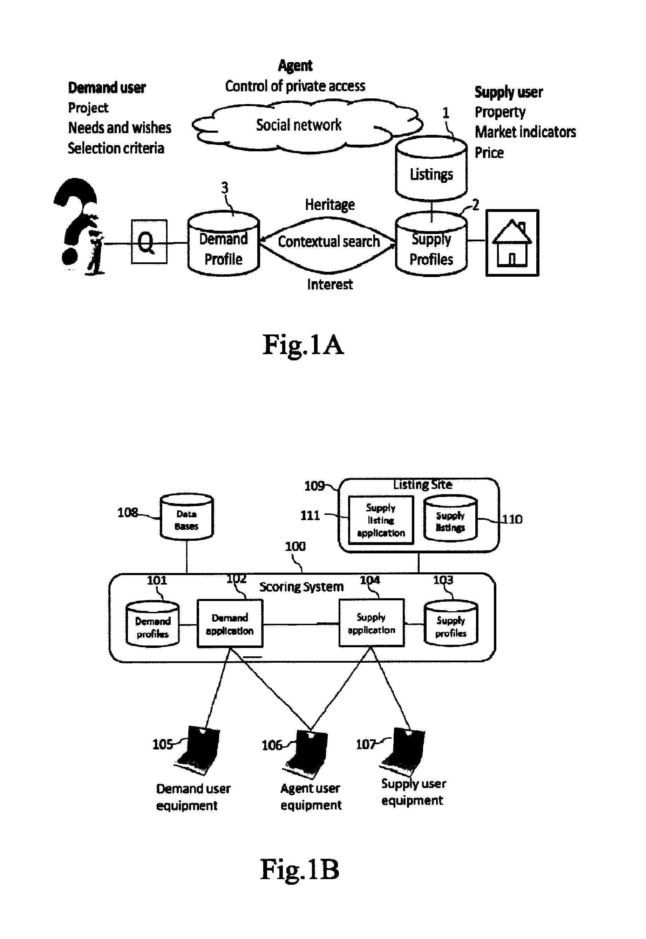

Thanks to the invention, as illustrated in Figure 1a, there is achieved the possibility, for a possible purchaser who is now precisely aware of his needs, to be displayed a set of listings corresponding to his/her profile, despite the very poor information provided by such purchaser.

With the invention, there is achieved a scoring mechanism which takes advantage not only the poor information provided by the possible purchaser, but also additional information - forming a kind of 'heritage" - which can be extracted from additional database or iteratively derived from the mechanisms described below for the purpose of completing the demand profiles.

In the following some definitions shall be provided first (I), prior to the description of the best mode of embodying the invention (II).

Advantages resulting from the inventions shall then be summarized (III).

## I . General principles and definitions

The following definitions shall apply:

**User:** corresponds to the physical person accessing the web server and generally the possible purchaser looking for a real estate transaction. Alternatively, under some occasions when specified as such, the user might also be the property owner or supply user.

**Data base**: As known by a skilled man, a data base, as illustrated by blocks 108, 110, 101, 103 of figure 1b, is a collection of data that is organized so that its contents can be easily accessed, managed and updated. In the context of this invention, two data base are provided the Demand database and a Supply database.

**Demand database**: the demand database collects data relevant to one particular possible purchaser, having proceeded with a subscription to the web server. Such database collects data representative of the user. Generally speaking the possible purchase has no precise idea of his wishes.... There is a need to enrich the limited information provided by the purchaser by soft values.

**Supply database:** this database is a collection of data regarding the different properties which are for sale or for rent, and includes information relating to the property itself as well as its owner.

**Demand profile:** is a collection of data - illustrated as block 101 in figure 1 - regarding one particular project relating to a user. A user may have different projects, and thus demand profiles.

**Supply profile:** is a collection of data - illustrated as block 103 in figure 1 - which corresponds to one particular property which is offered for sale or for rent.

**Ratings:** corresponds to a rating value ranging from 0 to 1 (or from 0 to 100%) which is assigned to one particular criterion and which, according to the present invention as described below, is liked to be iteratively updated by the mechanisms described below. Conversely an unrated data is a conventional data which is not likely to be updated with the mechanisms described below. For instance, an unrated data may be the number of rooms of a property or the price wished by a property owner for the sale of his property.

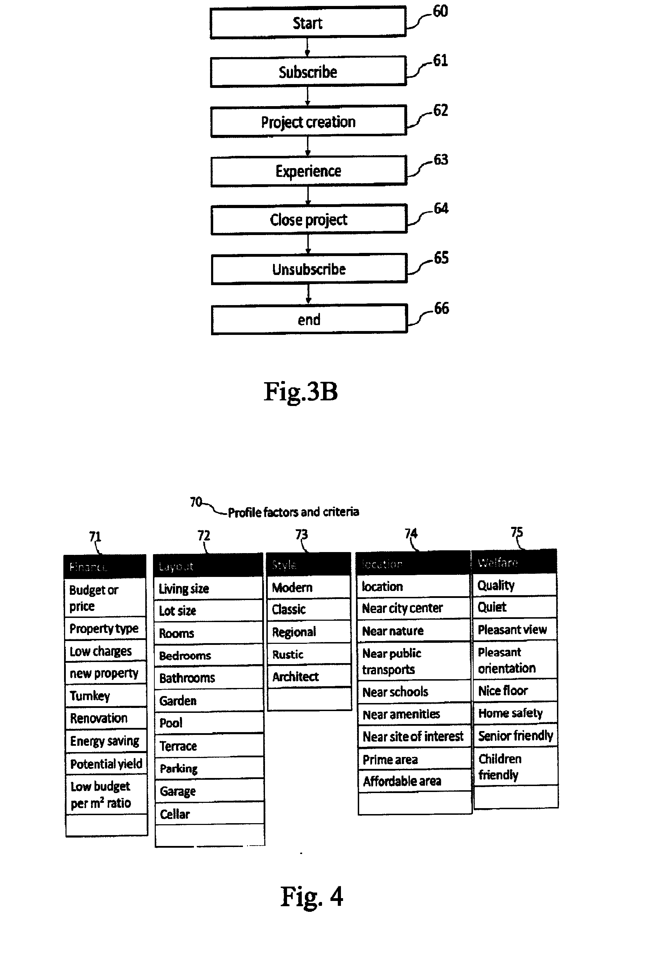

The different databases 108 and the different profiles - be it the demand profile 101 or the supply profiles 103, can be accessed independently by the user of the web site (a possible buyer) via a demand user equipment 105, or the property owner via a supply user equipment 107 or even a real estate professional via an Agent user equipment 106.
As it will appear more particularly in the following, both **demand** and **supply** profiles include a predetermined set of criteria - and preferably 43 criteria as illustrated in figure 4 - which correspond to some particular aspects of the description of a property being offered for sale (for a property owner) or wished by a possible purchaser.
In one illustrative embodiment, those criteria are divided into the following categories:

**finance** (budget or price, property type, low charges, new property, turnkey, renovation, energy saving potential yield, low budget per m$^2$ ratio etc...),
**layout** (living size, lot size, rooms, bedrooms, bathrooms, garden, pool, terrace, parking, garage, cellar etc...),
**style** (modern, classic, regional, rustic, architect etc...),
**location** (location, near city center, near nature, near public transports, near schools, near amenities, near site of interest, prime area, affordable area etc...),
**welfare** (quality, quiet, pleasant view, pleasant orientation, nice floor, home safety, senior friendly, children friendly etc...)

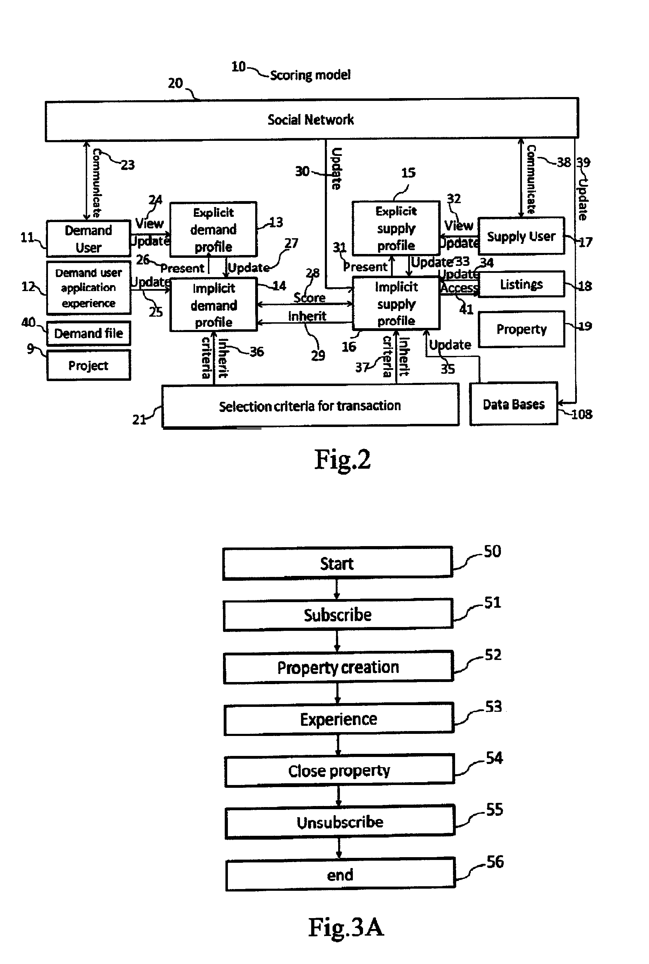

A key aspect of the present invention is that, as illustrated in figure 2, both Demand and Supply profiles are divided into two different parts: an **explicit** profile co-existing with an **implicit** profile.
An explicit profile is a sub-part of the profile, be it a demand profile or a supply profile, which collects data and more particularly values of the criteria which can be directly input or updated by the user through a graphical user interface, respectively a Demand graphical user interface or a Supply graphical user interface.
In particular, the **explicit demand profile -** as represented by block 13 of figure 2 - gathers data which is input by the user through a dedicated interface allowing the filling of a questionnaire.
Similarly, the **explicit supply profile** - as represented by block 15 of figure 2 - collects data which is input by the property owner through a dedicated interface allowing the precise description of his property.
Preferably, the graphical user Interface allows the user to assess to each criterion a predefined "classification" falling into n categories, with 2 <= n <= 10, and preferably through five categories for the property owner corresponding : **Excellent; Good; Average; Poor; Not Applicable,** and four categories for the user corresponding : **Mandatory; Important; Do not care; Prohibited.**
As it will appear below, such classification greatly facilitates the work to be done by both the user and/or the property owner, since only four categories or classes are provided to the user, and five classes for the property owner for the particular classification.
In addition, in order to facilitate the classification process, the user is provided with a particular graphical interface which incorporates a special graphical classification tool.

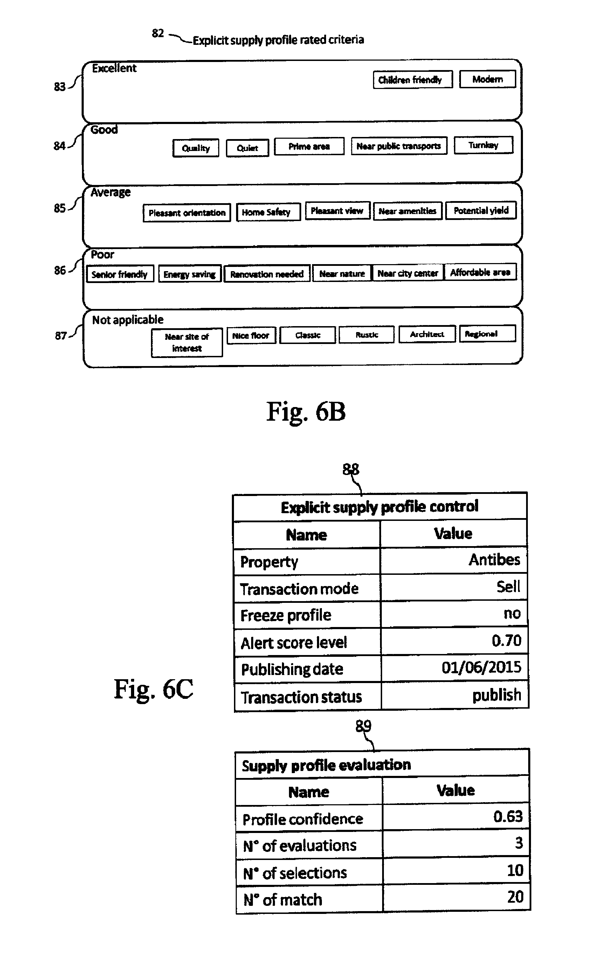

Such graphical tool is based on an interface which displays a number of icons or photos, with each icon or photo representing one particular criterion, and the classification of all classified criteria is allowed through a "drag and drop" facility allowing the property owner to select one particular icon/photo representing one criteria, and drag that icon/photo until it reaches one particular area corresponding to the particular classification being chosen, as illustrated in figure 6b which shows the five areas being displayed respectively corresponding to the five categories or classes **Excellent, Good, Average, Poor, Not applicable,** wherein each area comprises a set of icons. One sees, for instance that for the particular properties *"modern"* and *"children friendly"* are considered to be excellent. Conversely, regarding the criterion *"senior friendly",* the same property is qualified as being poor, thus meaning that displacement of seniors within the house might not be facilitated.

It can be seen that, thanks to such arrangement, both the property owner and the user of the web site has a limited workload for filling his questionnaire since, firstly, only a "basic" classification process is required from them and, secondly, the use of the graphical tool may be performed at any time, even during the navigation process while the displaying of a listing, thus facilitating the on-going classification process.

In addition, as this will appear below with more details, the search engine is improved with an efficient scoring system which is based on the use of the so-called implicit profiles.

Indeed, and this is a key aspect of the present invention, while the explicit profile contains data input or updated through the graphical user interfaces, and particularly the "predefined" classes assigned by the user, the implicit demand and supply profiles store soft values - including hereinafter designated as "ratings" for the different criteria which provide much more accuracy in the scoring process, because such ratings have continuous values - range from 0 to 100%.

A key aspect of the present invention is that while the user and/or the property owner is only displayed "classes " belonging to the five categories above for the property owner **(Excellent; Good; Average; Poor; Not Applicable),** and four categories for the user **(Mandatory; Important; Do not care; Prohibited),** the scoring process operates with a set of ratings ranging with continuous values from 0 to 1 (or 0 to 100%) which allows quite a number of correlation computations and statistical calculations.

In one embodiment of the invention, all the ratings/ stored within the implicit profiles (demand or Supply) are continuously updated thanks to data received from external database but also thanks to data derived from the user's own experience gained during the navigation or surfing processes.

In particular, when the user - being a possible purchaser searching for a real estate transaction - selects and displays some particular listing, its selection generates an event which shall be used by the scoring process for the purpose of updating a corresponding rating or soft value of one or more particular criterion. Similarly, if the user spends a significant time in displaying one particular listing, the whole soft values of the corresponding supply profiles are retrieved by the scoring process for the purpose of updating the soft values of the corresponding Demand profiles.

This method of fulfilling the selection criteria of the demand profile is especially realistic because it is based on global valuations of real estate properties available during the search. It uses conscious and unconscious psychological mechanisms which avoids implementing an analytical approach about each specific selection criteria. It saves a lot of time for the demand user to find the property that he is looking for.

As it can be, while the user is being displayed the basic "classes" of the different criteria describing one particular explicit supply profile, the experience formed by the surfing activity contributes to update the soft values/ratings stored within the demand profiles for the purpose of improving the selection process of the list of properties to be retrieved from the database and displayed to the user.

There is therefore achieved a scoring process of two particular profiles, an implicit demand profile with an implicit supply profile comprising accurate soft values in a transparent manner for both the user and property owner who only provided basic "classes" for the different criteria.

It can therefore be seen that a powerful scoring tool can be achieved, allowing a precise estimation of a score between two profiles, i.e. a possible purchaser and a property offered for sale or for rent.

In one particular embodiment, while the soft values assigned to the different criteria are updated, the corresponding "classes" being displayed to the user are also automatically updated through the graphical user interface. In other words, should the user selects and visualize quite a number of properties fitted with a swimming pool, it might well occur that the criterion corresponding to the swimming pool increases accordingly.

Alternatively, in one other embodiment, the user and/or property owner may decide to "freeze" the classes input through the graphical user interface and, in that embodiment, it is an interesting and advantageous aspect of the invention that the corresponding soft values still continue to be updated even when the corresponding classes are frozen.

The invention will now be better understood with the description of the best mode of operation.

## II. Description of the best mode of operation

The following description is presented to enable a person skilled in the art to make and use the invention.

Descriptions of specific embodiments are provided only as examples. Various modifications to the described embodiments may be apparent to those skilled in the art, and the generic principles defined herein may be applied to other embodiments and applications without departing from the spirit and scope of the invention. Thus, the present invention is not intended to be limited to the expressly described or illustrated embodiments, but is to be accorded the widest scope consistent with the principles and features disclosed herein.

**FIG.1a** illustrates the basic principles of the present invention. Conventional real estate search engine searches information stored in one or more listing databases **1,** and has very limited knowledge about the potential buyer or demand user. The scoring model adds a supply profile **2** which characterizes the property of the supply user, and a demand profile **3** which characterizes the project of the demand user. However, most demand users have a lot of difficulty to realize their needs and wishes, and identify their selection criteria to purchase or rent a property.

By construct, we define a set of selection criteria for a type of transaction with common properties in the supply and in the demand profile. The interest of a demand user for a property shows a level of expectation for the value of each criteria in the supply profile. The values of the demand criteria are therefore inherited and iteratively derived from the supply profiles of interest identified by the user navigation experience. The presentation of the profile enables the demand user to realize estimated values of a large number of selection criteria, and to optionally change some values if he wants to.

The demand profile criteria provide input for the search. A scoring algorithm compares the demand profile **3** with the supply profiles **2,** it estimates a transaction probability for each project - property association, and selects an ordered list of listings **1.**

The more the demand user experiences the search engine, the more refined is his demand profile for his project, the more accurate are the scores and the search results. It is a virtuous circle created by a demand profile <u>learning loop.</u> This learning loop is initiated by the demand user interest for some properties, characterized by his navigation experience, which in return inherit and dynamically derive supply profile values of those properties in the demand profile which becomes more accurate. This refined profile improves the score and search accuracy to select properties which meet better and better the demand user needs.

This learning loop meets the typical behavior of a demand user who wishes to start with a large search to understand the market, and continue with increasingly precise searches when he understands his needs, and the market supplies.

Therefore the search engine performs a <u>contextual search</u> with the demand profile which integrates preferences characterized by the navigation experience.

When the demand user is a visitor who has no subscription or no defined project, the system creates a pseudo profile and uses a correlation algorithm to implement the learning loop and the contextual search which improves the search relevance, taking into account previous user navigation experience.

The supply user needs market indicators to understand the positioning of his property in the market. He also needs to set a price for his property. The scoring system uses the score algorithm between the databases of supply and demand profiles to provide a market demand evaluation and estimate a time on transaction. It also provides a price estimation computed with an average price per $m^2$ or square foot in the location, the characteristics of the property formalized in the supply profile, and the market demand evaluation.

The real estate agents needs to offer value added services for his customers. Supply and demand profiles are accessible in a set of private or public domains to enable agents to organize private sales previews for their customers.

Supply users, demand users and agents communicate through a social network.

**FIG.1b** provides the general architecture of the best mode of a scoring system **100** for real estate search engines.

As shown in the figure, the supply user accesses a supply application **104** with a supply user equipment **107.** It may be a Personal Computer, a smartphone, a tablet or any computer device. The demand user accesses a demand application **102** with a demand user equipment **105.** The real estate agent accesses either a supply application **104** or a demand application **102** with an agent user equipment **106.**

The supply application **104** manages the user supply profiles **103.**

The demand application **102** manages the user demand profiles **101.**

The scoring system **100** accesses internal and external Data Bases **108** to access public information like a map of location or the average price per $m^2$ or square foot in the area.

It also access listings stored in a supply listing Data Base **110** and hosted by listing sites **109** and applications **111.** The scoring system **100** may also be integrated with the supply listing application **111** through a set Application Program Interfaces (API).

As shown in **FIG.2,** illustrating the scoring model **10,** the supply user **17** owns a piece of real estate identified as a property **19** which is described in one or more listings **18.** The supply user **17** wants to sell or rent his property **19** to a buyer or renter called demand user **11.** The demand user **11** has a project **9** to buy or rent a property. He communicates **23** with other users through a social network **20.**

The supply user **17** communicates **38** with other users through the common social network **20.**

The system defines a set of selection criteria for transaction **21** to address a specific market segment.

The scoring system creates an initial implicit supply profile **16** for each property **19** with criteria inherited **37** from the selection criteria **21** when the supply user **11** subscribes to the system or the system receives a listing.

The implicit supply profile **16** dynamically evolves over time with the objective to quantify as well as possible the characteristics of the property **19**. The scoring system initializes and updates the implicit supply profile **16** from the analysis **34** of internal or second hand source listing **18** text, pictures or video information, from external Data bases (open data), and internal Data Bases information **35,** from social network feedbacks **30,** and from explicit supply profile updates **33**. The selected type of property determines the set of selection criteria **21**.

The explicit supply profile **15** presents **31** a simplified view of the implicit supply profile **16** to the supply user **17**. The supply user views and updates **32** his explicit supply profile **15**. He also has the option to automatically freeze or unfreeze his explicit profile.

The system creates a <u>pseudo property</u> when a received listing **110** is not associated to a subscriber or an existing pseudo property. The system creates an implicit profile called pseudo supply profile for scoring and demand profile updates. In this case, the system does not create an explicit profile since there is no subscriber.

The scoring system creates an initial implicit demand profile **14** for each supply user project **9** with criteria inherited **36** from the selection criteria **21** when the demand user **11** subscribes to the system, or searches for a property without project.

The implicit demand profile **14** dynamically evolves over time with the objective to quantify the characteristics of the demand wishes and needs. The scoring system updates **25** the implicit demand profile **14** with criteria values, inherited **29** from implicit supply profiles **16,** and associated to demand user application experience events **12** such as property search, views, selection of properties, review of properties, or home bid.

The explicit demand profile presents **26** a simplified view of the implicit demand profile **14** to the demand user **11,** and presents the input parameters to initiate a property search. The demand user views and updates **24** his explicit demand profile **13** which updates **27** the implicit demand profile **14**. He also has the option to automatically freeze or unfreeze his explicit profile.

The demand file **40** is an optional file which contains information on the level of trust that the buyer will go up to the signature of the transaction, and that the tenant is creditworthy.

It may be guarantees from a financial institution, a preliminary tenant approval from an insurance company, guarantors or sureties.

It is confidential information which is not published. It is provided to the supply user when the demand user bid a property to encourage the supply user to accept the bid.

The system computes a supply - demand association score **28** between the implicit supply profile **16** and the implicit demand profile **14**. This score **28** represents the probability that the demand user **11** will buy or rent the property **19**. The score associates a demand profile with an offer profile which accesses **41** one or more listings displayed to the demand user.

As shown in **FIG.3a,** the supply user **17** follows the steps when he uses the system: Start step **50** is the first step, corresponding to the connection to the scoring system. The user optionally subscribes, in a step **51,** to the system to get a subscriber identity and credentials, and store one or more addresses such as the user email address or an agent email address to receive alerts. This step is optional because the system also get listings **111** from users who do not subscribe to the system. The system then creates a property, in a step **52,** to store a property identity. The user creates properties. The system creates pseudo properties for users who have not subscribed. The system assigns a default property identification to simplify the subscription process. The subscriber creates one property identity per property that he wants to list. The system creates an implicit and an explicit profile per property. The supply user has a user interface option to select the property of his choice before moving to the next step.

The supply user experiences the system, in a step **53,** to set or update the values of criteria and parameters in his explicit profile **15,** communicate with other users through the social network **20,** receive updates **30** from visit evaluation, or from data bases **108,** and receive alerts about potential demand users and projects exceeding a user specific score level. He may also get estimations of market demand, and get information on market indicators.

When the user wants to stop publishing his profile, he closes the property, in a step **54**. If a transaction is complete with a demand user and project, the system stores the profiles of the subscribers to dynamically adjust the parameters of the system algorithms.

The supply user unsubscribes to the score system, in a step **55,** if he had subscribed in step **51.**

It ends **56** the supply user steps.

As shown in **FIG.3b,** the demand user **11** follows the steps when he uses the system:

First step **60** is the start of the process corresponding to the connecting to the scoring system.

The user optionally subscribes, in a step **61,** to the system to get a subscriber identity and credentials, and store one or more addresses such as the user email address or an agent email address to receive alerts.

If the user does not want to subscribe to the system, the system identifies the demand user with an information stored in the user equipment **105** such as a cookie, and provide a subset of the subscriber services. The system does not send alerts to a non-subscriber user.

The next step is to create a project, in a step **62,** to store a property identity. The system may assign a default project identification to simplify the subscription process. The subscriber creates one project identity per real estate project that he is looking for. The system creates an implicit and an explicit profile per project. The demand user has a user interface option to select the project of his choice before moving to the next step.

If the user has not subscribed to the system or if he has no specific transaction project (he selects a project identity "no project"), the system creates a pseudo project with a pseudo demand profile to select and prioritize properties, but it does not show the scores of the profile associations.

The demand user experiences the system, in a step **63,** to search for properties, select properties, bid a home, get a profile confidence value which may change each time he experiences the system, and a score for each property selected by the search algorithm. He gets alerts with a reference of the new properties which exceed a user specific score level.

When the user wants to stop searching for a property, he closes the property in a step **64.** If a transaction is complete with a supply user and property, the system stores the profiles of the subscribers to dynamically adjust the parameters of the system algorithms.

The demand user unsubscribes in a step **65** to the score system if he had subscribed in step **61.**

It ends, in a step **66,** the demand user steps.

The selection criteria **21** are specified for multiple purposes:

- To score the association of a supply property, characterized by an implicit supply profile, with a demand project characterized by an implicit demand profile.
- To estimate the price of the property, characterized by an implicit supply profile.
- To link a search associated to a pseudo project, characterized by a new pseudo demand profile, to a pseudo project characterized by an existing implicit or pseudo demand profile.
- To link a listing, characterized by a new pseudo supply profile with a property, characterized by an existing implicit supply profile.

The supply and demand criteria are different objects linked with common properties.

The selection criteria **21** contain a set of objective and subjective criteria.

Most of the real estate sites use objective criteria like the price, the living size, the number of bedrooms and the location for property search. It simplifies the search engine because the objective criterion value remains unchanged for every users. However, this approach is not able to estimate a buying or renting decision behavior. It is the reason why the scoring system also uses subjective criteria which represent a user personal perspective, belief, desire or wish. Subjective criteria such as a pleasant view, a pleasant orientation, the home safety or the city center proximity play a very important role in the transaction decision and are integrated in the selection criteria **21.**

The selection criteria **21** contain a set of rated and unrated criteria.

A rated value ranges between 0 and 1. For the supply, a criterion is rated to measure the level of fulfillment of the criterion. For the demand, a criterion is rated to measure the level of expectation for the criterion. Subjective criteria are rated.

A criterion which is not rated is unrated. It may have any data type such as numeric, date, or string (e.g. a room has a numeric type, an address has a text type).

As mentioned above, the distinction between an unrated data and a rated data (ie rating) lies on the fact that the former is not likely to be automatically modified, while the latter is subject of an on-going updating mechanism, in particularly in accordance with the navigation performed by the user.

A dynamic demand criterion is a rated criterion created by the demand user navigation experience. For example, if a demand user always select at least 1 parking place, and sometimes 2, the system may estimate that 2 parking places are important but at least 1 is mandatory.

As shown in **FIG.4,** the implicit supply profile **16** and the implicit demand profile **14** contain a number of decision factors and criteria **70.**

Most of the real estate sites define financial **71** and layout **72** factors with a few criteria because they are the most easy to evaluate with Boolean logic. The preferred embodiment defines the big 5 decision factors: finance **71,** layout **72,** style **73,** location **74,** and welfare **75** to cover the full range of psycho-sociological factors for a real estate decision.

The financial factors relate to the criteria which impact the finance of the project: budget or price, property type (e.g. apartment, lot, houseboat, single family home, multi-family home, or unknown property), low charges, new property, turnkey, renovation, energy saving, potential yield, low budget per $m^2$ ratio or low budget per square foot ratio. The criteria are defined to enable a rating of the demand project expectation when possible. For example, a demand user can easily rate his expectation for the criterion "new property" between the following classes: mandatory, important, do not care and prohibited. It would be much more complex for a demand user to rate a criterion "year built". However, it is easier for a supply user to specify the property year built. It is the reason why the system ask the supply user to specify the property year built in the supply explicit profile and converts the user parameter year built into a level of fulfilment of the criterion "new property". Likewise, the supply user specifies a parameter "annual charges" which is converted by the system in the rated criterion "low charges".

The layout factors **72** relate to the layout of the property: living size, lot size, rooms, bedrooms, bathrooms, garden, pool, terrace, parking, garage, and cellar.

The style factors **73** relate to the style of the property: modern, classic, regional, rustic, and architect. They may be extended or adapted to address specific geographies.

The location factors **74** relate to the location of the property: location, near city center, near nature, near public transports, near schools, near amenities, near a site of interest, prime area, and affordable area. The supply location is the address of the property. The demand location is an address or the name of a geographic area, and a distance from this area. Rated criteria starting with "near" estimate the supply fulfilment and the demand level of interest for the proximity to the type of location. A prime area is more expansive. An affordable area is cheaper.

The welfare factors **75** relate to the welfare of the property: quality (of the construction), quiet, pleasant view, pleasant orientation, nice floor, home safety, senior friendly and children friendly.

The profile factors and criteria **70** are adapted to address specific market segments. A market segment associates a geography, a property type and a transaction mode. Here are examples of transaction modes:

- Sell / buy

- Unfurnished rent

- Furnished rent

- Home life

- Auction sale

A property **19** may fit for multiple property types. The supply user assigns one or more property types. For example, an apartment may be sold to a demand user who looks for a condominium. The user selects a default property type used to compute the profile confidence. The system defines an association tactic to score the criteria of one demand property type with the criteria of another supply property type.

A supply user may want to sign an exclusive contract with an agent or sign multiple non-exclusive contracts with multiple agents, and publishes one or more listings in listing sites to also sell direct.

Profile management permits to associate a single supply profile to a supply property and to associate a single demand profile to a demand project even if the user signs multiple contracts with multiple agents and publishes multiple listings. It enables agents to offer differentiated value added services associated to a single coherent profile.

The profile belongs to the user who has the option to delegate the management to multiple agents.

When the user subscribes for himself to the system with a level of service, he identifies himself with a name, a unique identification, and a set of credentials.

When a partner agent signs a contract with the user, the agent subscribes to the system for the user, and get access to the explicit profile. He get alerts on behalf of the subscriber, links a listing to the user profile, publishes the profile in a private or public domain, and provide user access to a private domain. If the agent searches for a property on behalf of the user, the system uses the project demand profile, but the agent user experience does not update the implicit demand profile.

The objective of the profile scope is to enable agents to reserve a customer property or project in a specific level of a private domain during a period of time. It permits to tune the profile before it is visible in the public domain. The scope of a profile is either the public domain or a private domain level controlled by the agent.

The objective of the access scope is to enable agents to give user access to a specific level of a private domain during a period of time. It permits to give a priority for the customers of the agent and his partners. The scope of an access is the public domain and an optional private domain level controlled by the agent.

The agent identified by a private domain identification controls a hierarchy of levels mapped with the agent organization structure. An example of structure is an office, a region, a country. At each level of this structure, an agreement may extend the private domain of the agent organization with another private domain of another organization. It creates a social graph of profiles.

For the supply user, the system publishes the profile in the current level specified in the profile scope. The system sends alerts to the agent and to the demand project users meeting the score threshold in the current access level specified in the access scope.

The demand user has access to the supply profiles in the public domain and in the current level of the private domain. The demand user and the agent receive alerts from supply properties in the public domain and in the current level of the private domain.

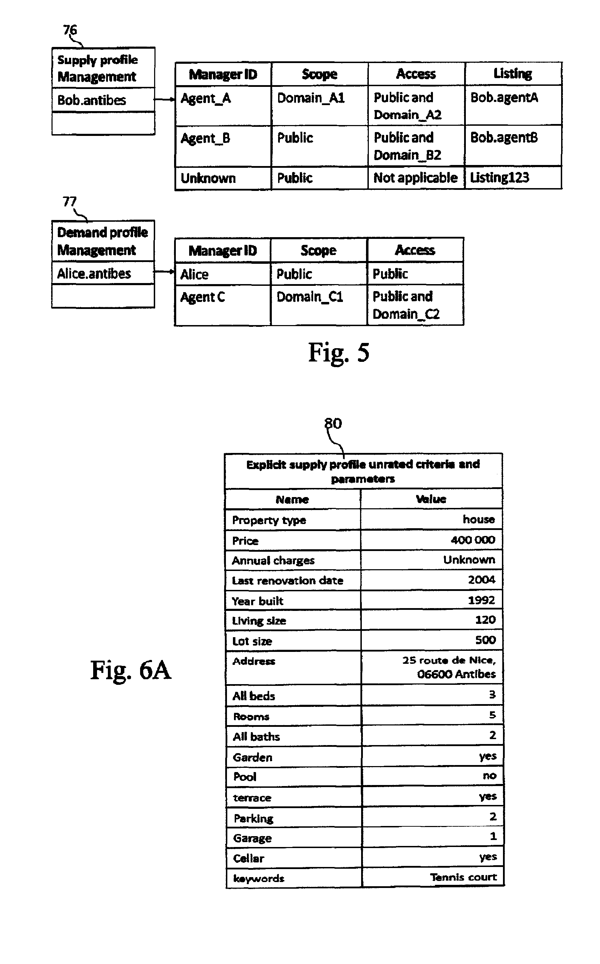

As shown in **FIG.5,** the supply profile management table **76** contains a list of the identities of the supply profiles. Each profile points to a table containing the details of the Manager ID, the scope, the access and listing links.

In this example, the identity of the supply profile is Bob.antibes. Bob has signed a non-exclusive selling agreement with 2 agents called Agent_A and Agent_B.

Agent_A has published Bob's profile at that time in Domain_A1 corresponding to every demand projects of the agent organization in the region. Agent_A has also provided Bob an access to the public domain by default, and to Domain_A2 corresponding to every demand projects of the agent organization in the country. Agent_A posted the listing at the address Bob.AgentA in a listing site. This addres may be a URL (Uniform Resource Locator).

Agent_B has published Bob's profile in the public domain. Agent_B has also provided Bob an access to the public domain by default, and to Domain_B2 corresponding to every demand projects of the agent organization in the country. Agent_B posted the listing at the address Bob.AgentB in a listing site. This addres may be a URL.

The system found that a listing Listing123 corresponding to Bob's profile has been posted in a listing site but Bob has not subscribed to the system for this listing.

The demand profile management table **77** contains the identity of the demand profile which references a table containing the details of the Manager ID, the scope and the accesses.

In this example, the identity of the supply profile is Alice.antibes. Alice has signed a non-exclusive buying agreement with 1 agent called Agent_C.

Alice has subscribed to the site to search for a home. Here profile is accessible in the site public domain, and she has access to the site public domain offer profiles.

Agent_C has provided at that time the access to Alice's profile in Domain_C corresponding to every offer properties of the Agent organization in the country. Agent_C has also provided Alice an access to the public domain by default, and to Domain_C2 corresponding to every offer properties of the Agent organization and all his partners.

The objective of the explicit supply profile **15** is to present the profile to the user in a comprehensive way.

The supply user updates **32** the values of the criteria through the explicit supply profile.

As shown in **FIG.6a,** an explicit supply profile unrated criterion or parameter **80** has a name and a value.

A criterion is defined in the profile factors and criterion list **70.**

A parameter is a variable defined in the explicit supply profile to compute the value of one or more criteria. For example, the year built is a parameter used by the system to compute the low charge rated criterion.

In this example, the property type is a house. It may be an apartment, a lot, a houseboat, a single family home, a multi-family home, or an unknown property. The price and the annual charges values are stored in the local currency. The annual charges may include the annual taxes and the condominium charges. The precise definition needs to be understood by every supply and demand users. The last renovation date may be a year or a more precise date including a month and a day. It is a parameter defined to evaluate the budget criterion. The living size and the lot size value are stored in the local area measurement (e.g. $m^2$ or square foot). The address is stored in the local area format. The number of bedrooms, rooms, bathrooms, parking and garage spaces is stored with a numeric value. The pool, garden and cellar have a Boolean value. Keywords contain suggested names for new criteria, characteristics which are worth to communicate to the demand users or words to add in the search selection.

As shown in **FIG.6b,** an explicit supply profile rated criterion **82** has a name and a class which measures the level of fulfillment of the criterion.

Five classes are defined as a compromise between the accuracy of the estimation and the simplicity of the user interface: excellent **83,** good **84,** average **85,** poor **86** and not applicable **87.**

The system maps the implicit average rated values to the explicit profile classes as follow: Not Applicable [0], Poor ]0-25%[, Average [25-50%[, Good [50-75%[, Excellent [75-100%].

In a preferred embodiment, the name of the rated criterion is associated with a photo to offer an enjoyable and intuitive user interface. To assign a class to a criterion, the user drags and drops the name of the criterion and the photo inside the user interface geographical form that has the name of the criterion class. The supply user sees every criteria of a class in the same geographical form in a glance. When the demand user evaluates the profile of a property, he also sees every criteria of the supply profile in a glance, and uses the same drag and drop mechanism to change his evaluation of the class of the criteria that he disputes. It permits to evaluate every criteria of a property with minimum user interactions.

As shown in **FIG.6c,** the explicit supply profile for a property has a set of parameters to control **88** the profile, and parameters to evaluate **89** the profile. Notice that a pseudo property is not controlled by the supply user. Each parameter has a name and a value. The property name is the name selected by the supply user to identify the property **19** since a user may advertise multiple properties. The transaction mode is the mode of transaction proposed by the supply user. Freeze profile parameter is defined to freeze and unfreeze the explicit profile. When the supply user freezes his explicit profile, the implicit profile continues to be updated with update events such as visit evaluations inside the ranges or classes defined in the explicit profile: Not Applicable [0], Poor ]0-25%[, Average [25-50%[, Good [50-75%[, Excellent [75-100%]. Alert score level parameter is defined to specify the level of score to trigger an alert. Publishing date is the date the supply user want to publish his profile. It enables the user to prepare his profile, evaluate the price of the property, and analyze the market indicator before publishing the profile. It also permits to motivate property owners to create a profile a long time before they are ready to sell or rent their property. Transaction status parameter is defined to specify that the property is published, bid or a transaction is signed with a demand user and project **9**.

The profile confidence measures the capacity of the profile to provide an accurate score, price estimation, search linking or listing linking estimation. The Number of evaluations measures the number of demand user evaluations after a property visit. The number of selections is the number of demand projects who have selected the property in their profile. The number of match is the number of demand projects with a score for the supply property greater than their alert score level.

The implicit supply profile is dynamically updated by different sources which create update events.

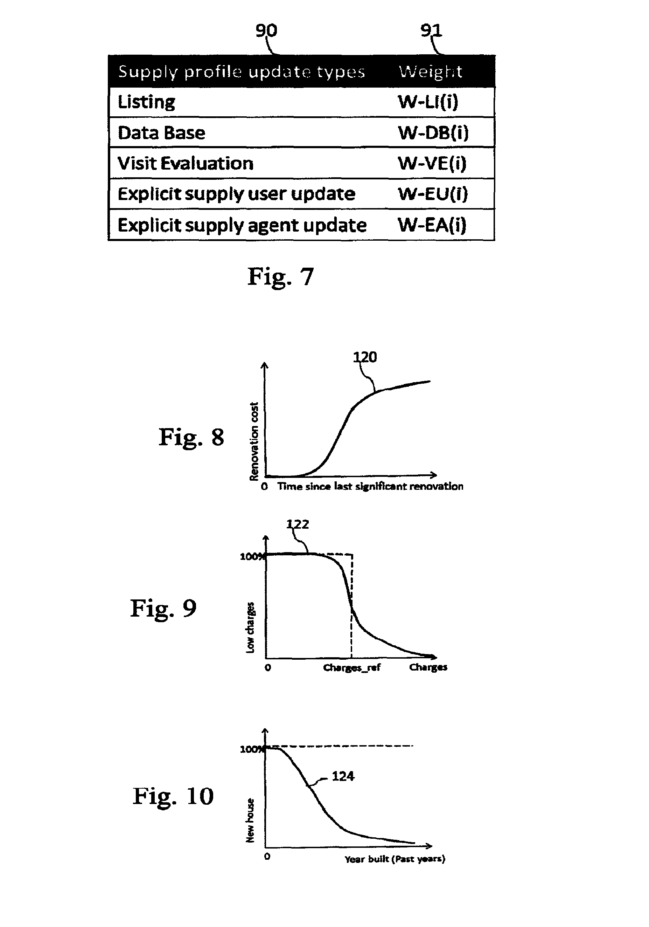

As shown in **FIG.7,** a supply profile update is triggered by an update event. The supply profile update types **90** are either a listing, a database, a visit evaluation, an explicit supply update or an explicit supply agent update. Each profile update type and each criterion has a specific weight **91** associated to the confidence of the update input for the criterion. For example, a certified agent update has a larger weight than the property owner update.

The system computes the weighted average value of the update events which may modify the class of rated criteria. At this time, the demand user is not allowed to increase the class of rated criteria. The objective of this algorithm is not to privilege the supply user, but to compute an average value which is as close as possible to the characteristics of the property.

Let s be the supply property index, i be the criterion index and x be the event index which updates the supply profile.

The Value of an Event x associated to a type y, for a criteria i of a supply property s is VEV(s,i,x,y).

This Value of an Event is independent of s and x, therefore VEV(s,i,x,y) = VEV(i,y). The Weight of an Event x associated to a type y, for a criteria i of a supply property s is WET(s,i,x,y).

This Weight is independent of s and x, therefore WET(s,i,x,y) = WET(i,y) 91.

The system defines a maximum of SETMax type of events.

By construct, we decide to normalize the sum of weights, therefore $\sum_{y=1}^{SETMax} WET(i,y) = 1$

The algorithm keeps L last updates VEV(s,i,x,y) and eliminates or adjusts the values which differ from the average by more than 3 standard deviations.

The average Value for criterion i is the weighted average of the sum of event values:

$$AVC(s,i) = \frac{\sum_{x=1}^{L} VEV(s,i,x,y) * WET(s,i,x,y))}{\sum_{x=1}^{L} WET(s,i,x,y)}$$

The standard Deviation for criterion i measures the amount of variation or dispersion from the average. For a finite set of weighted numbers, the standard deviation is found by taking the square root of the weighted average of the squared differences of the values from their average value.

$$SDC(s,i) = \sqrt{\frac{\sum_{x=1}^{L} WET(s,i,x,y) * (VEV(s,i,x,y) - AVC(s,i))^2}{\sum_{x=1}^{L} WET(s,i,x,y)}}$$

The scoring system dynamically adjust the Supply events values for criteria.

The supply Value of Event for criteria i associated to an event of type y is VEV(i,y). It is independent of the supply property.

Subjective criteria may be biased. Supply users tend to be optimistic because they want to sell their property at the highest price. Demand users tend to be pessimistic because they want to buy a property at the lowest price. The objective of the algorithm is to define the most relevant value of each event type for each explicit class and each criteria to be as close as possible to the characteristics of the supply property.

The value of an explicit supply or visit evaluation update belongs to an explicit class (Not Applicable [0], Poor ]0-25%[, Average [25-50%[, Good [50-75%[, Excellent [75-100%]).

For a large number L of transactions signed, the system selects the supply properties, with a large number M of update events including visit evaluations because it increases the confidence in the measurement of the Average Value of the Criteria AVC(s,i,t) when the transaction is signed.

The first value of an event of class y is in the middle of the class (e.g. VEV(y=good, t=0)=62.5%.)

For each signed property, the Mean Difference for criteria i, type y at time t is the difference between the average value of the events of type y and the Average Value of every events stored for this property:

$$MD(s,i,y,t) = \frac{1}{M}\left(\sum_{x=1}^{M} VEV(s,i,x,y,t) - AVC(s,i,t)\right).$$

For the large number of properties, the Mean Difference for criteria i, type y at time t is the average mean difference: $MD(i,y,t) = \frac{1}{L}\left(\sum_{s=1}^{L} MD(s,i,y,t)\right).$

If the source of the event type tends to be more optimistic, this mean difference is positive. If the source of the event type tends to be more pessimistic, this mean difference is negative. A large Mean Difference means a very optimistic event type. The adjusted Value of Event for criteria i, type y at time t+1 is the difference between the previous Value of Event and the Mean Difference:

$$VEV(i,y,t+1) = VEV(i,y,t) - MD(i,y,t).$$

$$VEV(i,y,t+1) = VEV(i,y,t) - \left(\frac{1}{L}\left(\sum_{s=1}^{L}\left(\frac{1}{M}\left(\sum_{x=1}^{M} VEV(s,i,x,y,t) - AVC(s,i,t)\right)\right)\right)\right).$$

The new VEV(i,y,t+1) value must remain in the class range (e.g. Good [50-75%[). If the new Value of Event is outside the class range, the algorithm selects the closest value at the border of the range.

The algorithm computes a new Value of Event for each criterion i and for each class y.

The system estimates the renovation cost which is a function of the property price, the time since the last renovation and the location of the property.

Renovation_cost=property_price*Function(time_since_last_significant_renovation)* Function(location)

As shown in **FIG.8,** the second part of the renovation cost operation is a function **120** of the time since the last significant renovation. It has a S-shaped curve. It starts with a zero value for a small time and increases slowly during the first years because the property is new. Then it increases quickly because the equipment is damaged and needs to be renovated. After some time, the cost function increases slowly again because it is not much more expansive to renovate an old or a very old equipment.

The third part of the renovation cost operation is a function of the location area. The default value is 1. It is higher for a large city with a high cost of renovation. It is smaller for a small city and countryside.

The system converts the supply "charges" parameter into the rated "Low charges" criterion.

The rated value of the "low charge" criterion is a function of the supply charges and the reference charges which is the average reference charge value for a similar property in the location area: AVC(s,low_charges)=Function((*s, charges*), reference_charges))

As shown in **FIG.9,** the Low charge Average Value is a function **122** of annual charges and average reference charge value for a similar property in the location area. It has a S-shaped curve. It starts at 100% for no charges, then it decreases slowly for small charges because small charges fully fulfill the low charge criterion. It decrease quickly for charges close to the average reference and reaches 50% value at the average reference. It continues to decrease quickly for charges greater than the average reference and follows an asymptotic decrease around 0%.

The system converts the supply "year built" parameter into the rated "new property" criterion.

The rated value of the "new_property" criterion is a function of the year built parameter: AVC(s, new_property)=Function(*s*, year_built).

As shown in **FIG.10,** the new property Average Value is a function **124** of year built. The x axis "year built" measures the number of years since the property is built. It starts at 100% for the current year, then it decreases slowly for recent years because a new property fully fulfills the new property criterion. It decreases quickly for a larger number of years, and follow an asymptotic decrease around 0%.

The objective of the explicit demand profile **13** is to show the profile to the user in a comprehensive way, and to display the input parameters of a property search.

The demand user eventually set or updates his explicit demand profile to initiate a property search.

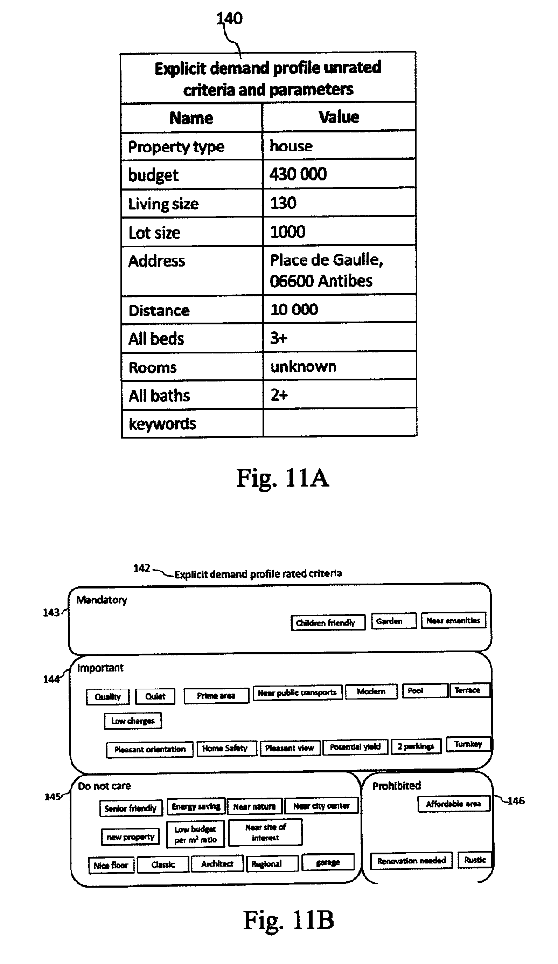

As shown in **FIG.11a,** an explicit demand profile unrated criterion or parameter **140** has a name, and a value.

In this example, the property type is a house.

The budget value is stored in the local currency. The living size and the lot size values are stored in the local area measurement (e.g. $m^2$ or square foot). The address is stored in the local area format. The demand location contains an address or the name of a geographical area, and a distance D from this area. The explicit profile displays a single address. However, the implicit profile may store a history of multiple addresses. The distance value is stored in the local are measurement (e.g. meter of foot) from the border of the specified address. The number of bedrooms, rooms, bathrooms, is stored with a numeric value. The sign + means greater or equal to the number. Keywords may be added to signal characteristics that the demand user is looking for.

A number of explicit supply profile parameters **80** do not appear in the explicit demand profile unrated criterion and parameter table **140.** Those parameters are converted into rated criterion and appear in the next figure.

As shown in **FIG.11b,** an explicit demand profile rated criterion **142** has a name and a class which measures the level of expectation for the criterion. 4 classes are defined as a compromise between the accuracy of the estimation and the simplicity of the user interface: mandatory **143,** important **144,** do not care **145,** and prohibited **146.**

To improve usability, the system translates the precise rated values of the implicit profile **14** into a set of classes comprehensive for the demand user **11.** The system maps the implicit average rated values to the 4 explicit profile classes as follow: Prohibited [0%], Do not Care ]0-40%[, Important [40-80%[, Mandatory [80-100%].

The class Prohibited (0%) is set by the demand user and is not updated by the profile update algorithm.

The dynamic profile update algorithm applies for every other classes as follow:

The value of the explicit demand user update event is set in the middle of the range for the classes Important (60%) and Do not care (20%), and in the end of the range for the class Mandatory (100%).

In a preferred embodiment, the name of the criterion is associated with a photo to offer an enjoyable and intuitive user interface. To assign a class to a criterion, the user drags and drops the name of the criterion and the photo inside the user interface geographical form that has the name of the criterion class. The user sees every criteria of a class in the same geographical form at a glance.

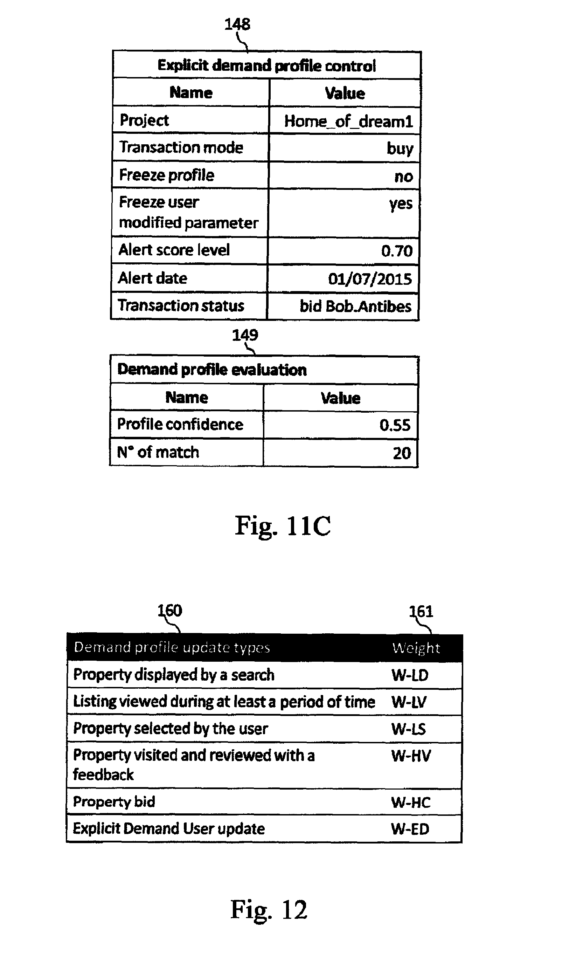

As shown in **FIG.11c,** the explicit demand profile for an project has a set of parameters to control **148** the profile, and a parameter to evaluate **149** the profile. Notice that a pseudo project is not controlled by the demand user. Each parameter has a name and a value. The project name is the name selected by the demand user to identify the project **9** since a user may be looking for multiple properties. The transaction mode is the mode of transaction defined by user. Freeze profile parameter is defined to freezes and unfreezes the explicit profile. When the demand user freezes his explicit profile, the implicit profile continues to be updated with update events inside the ranges or classes defined in the explicit profile: Do not Care ]0-40%[, Important [40-80%[, Mandatory [80-100%]. Freeze user modified parameter is defined to freezes and unfreezes the parameters or criteria which have been modified by the demand user. Alert score level parameter is defined to specify the level of score to trigger an alert. Alert date is the date the demand user expects to actively search for a property. It enables the user to prepare his profile, and understand the market supply before he is ready to receive alerts from the system. It also permits to motivate demand users to create a profile a long time before they are ready to sign a transaction. Transaction status parameter is defined to specify that the project is open, bid or a transaction is signed with a supply user and property **19.**

The profile confidence measures the capacity of the profile to provide an accurate score, price estimation, search linking or listing linking computation. The number of match is the number of supply properties with a score greater than the alert score level.

The implicit demand profile is dynamically updated by different sources which create update events.

As shown in **FIG.12,** a demand profile update is triggered by an update event. The demand profile update types **160** are either a property displayed by a search, a listing viewed during at least a period of time, a Property selected by the user, a property visited and reviewed with a feedback, a property bid, or an Explicit Demand User update. Each update event has a specific weight **161** which characterizes the confidence of the update value. For example, a property selected by the user has a larger weight than a listing viewed during at least a period of time. The value of a criterion for a property update event (a property displayed by a search, a listing viewed during at least a period of time, a Property selected by the user, a property visited and reviewed with a feedback, a property bid) is the average value of the criteria in the implicit supply profile of the property.

If the user updates the value of a rated criterion from one class to the other (e.g. do not care to important), the system algorithm computes the criterion value in the implicit profile. If the new value does not belong to the desired class in the explicit profile, the system updates the Average value in the implicit profile to the value in the new class the closest to the old class (e.g. 40%). The objective of this algorithm is to privilege the update of the demand user.

The Standard Deviation increases accordingly.

Let d be the demand project index, i be the criterion index and x be the event index which updates the demand profile.

The Value of an Event x associated to a type y, for a criteria i of a demand project d is VEV(d,i,x,y).

This Value of an Event is independent of d and x, therefore VEV(d,i,x,y) = VEV(i,y). The Weight of an Event x associated to a type y, for a criteria i of a demand project d: WET(d,i,x,y).

This Weight is independent of d and x, therefore WET(d,i,x,y) = WET(i,y) 161.

The system defines a maximum of DETMax type of events.

By construct, we decide to normalizes the sum of weights: $\sum_{y=1}^{DETMax} WET(i,y) = 1$

The algorithm keeps L last updates VEV(d,i,x,y). It eliminates or adjust the values which differ from the average by more than 3 standard deviations.

The Average Value for criterion i is the weighted average of the sum of the event values:

$$AVC(d,i) = \frac{\sum_{x=1}^{L} VEV(d,i,x,y) * WET(d,i,x,y))}{\sum_{x=1}^{L} WET(d,i,x,y)}$$

The standard Deviation for criterion i measures the amount of variation or dispersion from the average. For a finite set of weighted numbers, the standard deviation is found by taking the square root of the weighted average of the squared differences of the values from their average value.

$$SDC(d,i) = \sqrt{\frac{\sum_{x=1}^{L} WET(d,i,x,y) * (VEV(d,i,x,y) - AVC(d,i))^2}{\sum_{x=1}^{L} WET(d,i,x,y)}}$$

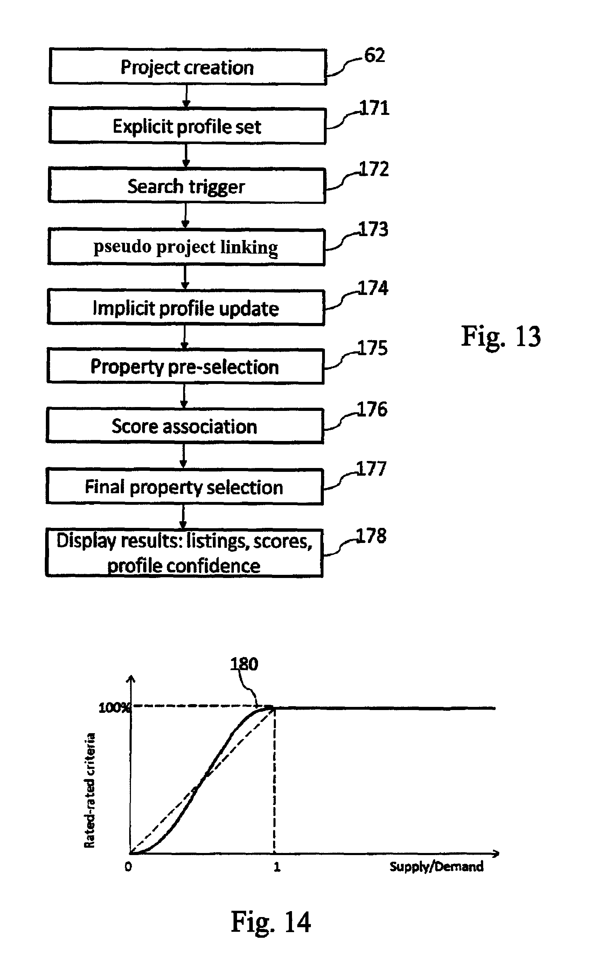

The system converts the supply Boolean criterion into demand rated criterion based on the user experience. It applies for garden, pool, terrace and cellar. The value of the event update is 0 if the supply criterion is false, and 1 if the supply criterion is 1. The dynamic update algorithm applies, and computes a rated average and standard deviation.
To refine the score, it may also create dynamic demand criteria for numeric supply criteria. It applies for rooms, bedrooms, bathrooms, parking and garage. The value of the event update for each number is 0 if the number does not appears in the supply criterion, and 1 if the number appears in the supply criterion. The dynamic update algorithm applies, and computes a rated average and standard deviation.
The system computes a standard deviation for the demand numeric criterion based on the user experience. For example, the user specifies a 50 m$^2$ living size in the explicit profile to search for an apartment. The scoring system selects a number of properties and the user selects an apartment of 60 m$^2$. The system keeps the 50 m$^2$ living size average value, and it computes a standard deviation which takes into account the 60 m$^2$ living size update event.
As shown in **FIG.13,** the <u>search steps</u> are the following:
The demand user or the system creates a project, in a step **62,** also shown in **FIG.3b** to search for a property. If the user has not subscribed to the site, or if the user has selected "no project", the system creates at least one pseudo project.
The demand user eventually set or updates his explicit profile, in a step **171,** with new criteria values and triggers a search in a step **172** through his user interface.
If the user has not selected any project, the system proceeds with a pseudo project linking step **173** to link the search input with a stored pseudo project.
The system updates the implicit profile in a step **174** using the dynamic update of the implicit demand profile algorithm explained above.
The system performs a property pre-selection in a step **175** in the project searching scope domain based on Boolean logic to select the property which meet the unrated criteria values (e.g. location, budget, lot size, minimum number of bedrooms) and with extended criteria value ranges to pre-select a number of properties. For example, this step selects properties with a living size in the range of the demand project $\pm$ 20%. The system also eliminates the properties which fulfil a criterion which is prohibited by the demand.
The system computes a score in a step **176** for each pre-selected property.
The system uses <u>fuzzy logic score the supply - demand associations.</u> Fuzzy logic deals with reasoning that is approximate rather than fixed or exact. Fuzzy logic variables may have a truth value that ranges between 0 and 1. It fits specifically for a search engine to score a large number of supply - demand associations with a large number of decision criteria, including subjective criteria.
It performs a final property selection in a step **177** with a minimum number of properties or the properties which exceed a specified score level.
The system displays the results in a step **178:** the ordered list of properties, highest score first, the scores for each property, and the supply profile confidence.
The system measures the <u>correlation</u> between each pair of demand criteria values. It refers to any type of relationship between mean values of the demand criteria. The system computes the correlation coefficient obtained by dividing the covariance of the two criteria by the product of their standard deviations.
For a large number L of demand profiles which have reached the transaction state, and a specific market segment, the Average Value for the Criteria is: $AVC(L,i) = \frac{1}{L} \sum_{d=1}^{L} AVC(d,i).$

The correlation of criteria i and j is obtained by dividing the covariance of the two criteria by the product of their standard deviations:

$$Cor(i,j) = \frac{\frac{1}{L}\sum_{d=1}^{L}\left(AVC(d,i)-AVC(L,i)\right)*\left(AVC(d,j)-AVC(L,j)\right)}{\sqrt{\frac{1}{L}\sum_{d=1}^{L}(AVC(d,i)-AVC(L,i))^2}*\sqrt{\frac{1}{L}\sum_{d=1}^{L}(AVC(d,j)-AVC(L,j))^2}} \in [-1,+1]$$

The correlation is +1 in the case of a perfect direct (increasing) linear relationship (correlation), -1 in the case of a perfect decreasing (inverse) linear relationship and some value between-1 and 1 in all other cases, indicating the degree of linear dependence between the criteria. As it approaches zero there is less of a relationship (closer to uncorrelated). The closer the coefficient is to either -1 or 1, the stronger the correlation between the criteria.

The system computes the p x p correlation matrix of the p criteria per market segment.

The correlation matrix is symmetric because the correlation between criterion i and criterion j is the same as the correlation between criterion j and criterion j.

The system uses the criteria correlation matrix as follow:

1) To simplify the number of criteria for a market segment

If two criteria have a high correlation close to +1 or -1, the system administrator may suppress one of the two criteria. For example, if "Prime area" and "affordable area" have a perfect decrease linear relationship, one of them may be suppressed. In this case, the weight of the remaining criterion is the sum of the two weights.

2) To set initial values of criteria which are not set by the user

The first time the subscribers initiates a property search for a project, it set initial demand values for some criteria (e.g. location, property type, budget, living size, potential yield) and get a search result. To speed up the convergence of the demand profile, the system sets initial values of criteria which are not set by the user with the average value of the correlated criteria which are set by the user.

To improve the search accuracy of pseudo projects, the system correlates searches of pseudo projects with previous user experience. It links a new search associate a pseudo project with pseudo demand profiles built by previous searches and user experiences. A new search is linked to pseudo demand project if the profile of the new search has the lowest profile deviation value with the profile of the stored projects and the profile deviation is below a specific threshold. It permits to improve the search algorithm of pseudo projects with the detailed profiles built by correlated searches. The system keeps a maximum of p pseudo projects to improve the search algorithm.

The profile deviation is the weighted average of the sum of the criterion deviation values.

The criterion deviation ranges between 0 and 1, from no deviation to maximum deviation.

Let d1 be one existing pseudo project and d2 be the new project.

The criterion deviation applies for criterion with an assigned value for d1 and d2.

Therefore AVC(d1,i) and AVC(d2,i) $\neq$ 0

The criterion deviation operation is a function of the type of criterion:

1) Numeric criterion

It applies for budget, price, living size, lot size, bedrooms, bathrooms, parking and garage.

The deviation operation of d1 and d2 with numeric criterion i is the ratio between the absolute value of the difference and the reference value:

$$\text{Deviation}(d1, d2, i) = \frac{|AVC(d1,i) - AVC(d2,i)|}{AVC(d1,i)}$$

If d1 and d2 have the same average value, the numerator is 0 and there is no deviation.

If d2 has a very small average value compared to d1, the numerator is close to the denominator and the deviation is maximum.

2) Rated criterion

It applies for every rated criteria in every factors.

The deviation operation of d1 and d2 with rated criterion i is the absolute value of the difference between the values. There is no need to divide by the reference value because the values are rated between 0 and 1:

$$\text{Deviation(d1, d2, i)=}|AVC(d1,i)\text{- }AVC(d2,i)|$$

If d1 and d2 have the same average value, the difference is 0 and there is no deviation.

If d1 and d2 have the opposite average values, the difference is 1 and the deviation is maximum.

3) Boolean criterion

It applies for the pool, garden, terrace and cellar.

XOR (Exclusive OR) operation is 0 if both Booleans have the same value.

The deviation operation of d1 and d2 with Boolean criterion i is:

$$\text{Deviation(d1, d2, i)=}AVC(d1,i) \text{ XOR } AVC(d2,i)$$

If d1 and d2 have the same value, the XOR operation is 0 and there is no deviation. If d1 and d2 have the opposite values, the XOR operation is 1 and the deviation is maximum.

4) Property type criterion

The deviation operation of d1 and d2 with "Property type" criterion i is:

$$\text{Deviation(d1, d2, property\_type)=Function (d1,d2, property\_type)}$$

The Function has a specific value for each property type association.

If d1 and d2 have the same property type, the deviation is 0.

If d1 property type is an apartment, and d2 property type is a condo, the deviation is small (i.e. 10%)

If d1 property type is an apartment, and d2 property type is a lot, the deviation is 100%.

The same method applies for other types of property.

Deviation of a new search:

Only the criterion with known Average values for the new project and the existing project are considered.

WDS(i)=Weight of Deviation for a Search with criteria i
n = number of matching criteria associations

The deviation value of a new search with a pseudo project is the weighted average of the sum of the criteria deviations:

$$\text{Deviation(d1,d2)=}\frac{\sum_{i=1}^{n} \text{Deviation}(d1,d2,i)*\text{WDS(i)})}{\sum_{i=1}^{n} \text{WDS(i)})}$$

The scoring system <u>dynamically adjust the deviation weights</u> to minimize the average profile deviations of linked consecutive searches inside a large number of projects.

Let p be the maximum number of deviation criteria.

By construct, we decide to normalize the sum of weights: $\sum_{i=1}^{p} WDS(i) = 1.$

The deviation algorithm has p degrees of freedom.

For a large number L of new searches characterized by a profile d2 and a large number of projects characterized by a profile d1, the Mean Squared Deviation is $MSD = \frac{1}{L}\sum_{d1,d2=1}^{L} Deviation(d1,d2)^2$

The algorithm adjusts the deviation weights to minimize the Mean Squared Deviation MSD as follow:

While some weight can be adjusted:

For every available criteria i, flag every criteria weights which decrease MSD when WDS(i) is increased by 1%.
For every flagged criteria weight, increase WDS(i) by 1 %.
Normalize the sum of weights.

If the weight of a criterion arrives below a threshold, the system administrator may suppress the criterion for the deviation algorithm.

The system references listings from different listing sites. It links a property and its supply profile with every correlated listings published in any listing sites.

It analyses the public records (e.g. price, property type, living size, lot size, number of rooms, bedrooms, bathrooms, location) and the text, photos or video of the listing (e.g. nice view, close to shopping) of the new listing to create a listing profile.

It performs a pre-selection with current supply profiles based on Boolean logic to select the properties which meet the unrated criteria values (e.g. location, budget, lot size, minimum number of bedrooms) and with extended criteria value ranges to pre-select a number of properties.

For every pre-selected supply profile, it evaluates a criterion deviation for every available criteria. The criterion deviation has been already described to link a new search with a pseudo project.

The profile deviation is the weighted average of the criteria deviation. The Weight is called WDP(i) =Weight of Deviation for a Profile with criteria i.

The new listing is linked to an existing property and its associated supply profile if the listing profile has the lowest deviation with the supply profile and this deviation is below a threshold.

The weights WDP(i) are adjusted to minimize the Mean Squared Deviation for a large number of new listings linked to properties and confirmed by the supply user. The dynamic adjustment algorithm of WDP(i) uses the same method as the one described above to adjust the Weights for searches WDS(i).

When a demand user initiates a search, the score algorithm provides a list of supply profiles associated to properties. If a property is linked to multiple listings, the system prioritizes the listings associated to a supply profile as follow:

1. It pre-selects the preferred listing sites of the partner agents who signed a contract with the demand user who initiated the search
2. It eliminates the listings which are out of date.
3. If multiple listings meet the previous steps, it selects the listing site with the highest level of service.

The score operation for a supply - demand criterion association measures the impact of the level of satisfaction of the demand expectation with the supply fulfillment for a transaction decision. It is specific for each criterion association. The preferred embodiment defines the following types of criteria score operations:

1) Rated supply and rated demand criterion association

It applies for finance, style, location, and welfare classes, with the following criteria: low charges, new property, turnkey, renovation, energy saving, potential yield, low budget per m$^2$, modern, classic, regional, rustic, architect, near the city center, near the nature, near public transports, near schools, near amenities, near site of interest, prime area, affordable area, quality, quiet, pleasant view, pleasant orientation, nice floor, home safety, senior friendly, children friendly.

The score operation for the rated supply and rated demand criterion association is a function of the Average Value for the supply property s criterion i (AVC(s,i)), the Standard Deviation for the supply property s criterion i (SDC(s,i)), the Average Value for the demand project d criterion i (AVC(d,i)), and the Standard Deviation for the demand project d criterion i (SDC(d,i)). It is defined in the following formula:

$$\text{Score}(s,d,i)=\text{Function}\left(\frac{AVC(s,i)-(SDC(s,i))}{AVC(d,i)+(SDC(d,i))}\right)$$

The ratio between the Average supply value AVC(s,i) and the Average demand value AVC(d,i) measures the level of satisfaction of the demand expectation with the supply fulfillment for a transaction decision. It does not exceed 100%.

The standard deviation measures the amount of variation or dispersion from the average. The operation considers the pessimistic case where the Standard Deviation decreases the Average Value of the supply fulfillment. Therefore, the numerator value is the Average Value for the supply property s Criterion i (AVC(s,i)), minus the Standard Deviation for the supply property s Criterion i (SDC(s,i)). The highest is Standard Deviation, the lowest is the numerator.

The operation also considers the pessimistic case where the Standard Deviation increases the Average Value of the demand expectation. The denominator value is the Average Value for the demand project d Criterion i (AVC(d,i)) plus the Standard Deviation for the demand project d Criterion i (SDC(d,i)). The highest is Standard Deviation, the highest is the denominator, and the lowest is the score.

The score is higher when the Standard Deviation is low. It applies in the following cases:

- When the supply user publishes his profile. It is beneficial for the supply user who wants to advertise his new property. It improves the visibility of the new entrant. The demand users see that the supply profile confidence is low and may not have a high confidence in the score. But he should be motivated to be the first person to visit the property.
- When a large number of visit feedbacks converge. In this case, the supply profile confidence is high, and the demand should have a high confidence in the score.

As shown in **FIG.14,** the function **180** has a S-shaped curve for a supply / demand ratio between 0 and 1. It scores 0 for a ratio of 0 and 1 for a ratio of 1. The function decreases the score for a supply / demand ratio close to 0% because the demand does not consider a criterion association which is too far from his expectation, and increases the score for a supply / demand ratio close to 100% to compensate the uncertainty of the Standard Deviation.

When the fulfillment by the supply is greater than the expectation by the demand, the score is 100% and the function **180** has a flat value of 1 for a supply / demand ratio greater than 1.

2) Boolean supply and rated demand criterion association

It applies for layout class, with the following criteria: garden, pool, terrace and cellar.

The score operation is equal to the Value for the supply property s Criterion i: Score(s,d,i)=AVC(s,i).

3) Numeric supply and numeric demand criterion association

It applies for layout class, with the following criteria: number of rooms, bedrooms, bathrooms, parking and garage places.

The demand minimum number is set by the demand user in his implicit profile, or discovered with navigation experience.

The Score operation for the numeric supply and numeric demand criterion association is a function of the Minimum Value for the supply property s Criterion i (MVC(s,i)), and the Average Value for the demand project d Criterion i (AVC(d,j)). It is defined in the following formula:

$$Score(s,i,d,)=Function(MVC(s,i),AVC(d,i)$$

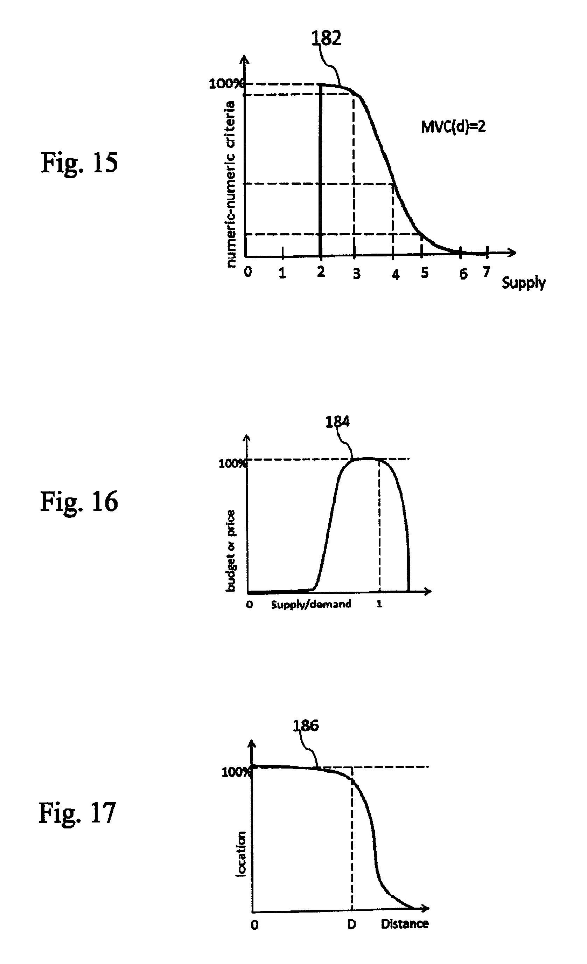

As shown in **FIG.15,** if the fulfillment by the supply is smaller than the minimum expectation by the demand, the score is 0.

If the fulfillment by the supply is equal to the minimum expectation by the demand, the score is 100.

If the fulfillment by the supply is greater than the minimum expectation by the demand, the score function has a S-shaped curve to offer a high score for a supply value greater and close to the minimum expectation by the demand, and to drop quickly for a supply value much greater than the minimum expectation by the demand.

The figure illustrates an example of score function **182** with the Minimum Value for the demand project d Criterion "number of bedrooms" equal to 2. The score function is 0 for 1 bedroom, 100% for 2 bedrooms, it is close to 100% for 3 bedrooms, less than 50% for 4 bedrooms, and close to 0 for more. The function allows to specify a numeric non integer value. For example, 2.5 bedrooms if the property has 2 standard bedrooms plus a small bedroom.

4) Budget or price association

The system scores either a budget or a price. They are linked together with the following operation:

$$Budget=(price\_of\_property*trading\_rate)+notary\_fees+renovation\_cost$$

The notary fees are specific for each country.

The supply user specifies a price for his property.

The demand user has the choice to specify either a price or a budget. If he specifies a price, the system scores a price. If he specifies a budget, the system converts the supply price into a supply budget and compares the supply budget with the demand budget.

The Score operation for the budget or price criterion association is a function of the Average Value for the supply property s criterion budget or price (AVC(s,i)), the Standard Deviation for the supply property s criterion budget or price (SDC(s,i)), the Average Value for the demand project d criterion budget or price (AVC(d,i)), the Standard Deviation for the demand project d criterion budget or price, (SDC(d,i)):

$$\text{Score(s,d,i)=min(Function(}\frac{\text{AVC(s,i)-SDC(s,i)}}{\text{AVC(d,i)+SDC(d,i)}}\text{); Function(}\frac{\text{AVC(s,i)+SDC(s,i)}}{\text{AVC(d,i)}-\text{SDC(d,i)}}\text{))}$$

AVC(s,i)/AVC(d,i) is the budget or price supply / demand ratio.

As shown in **FIG.16,** the score **184** is 100% when the supply budget or price for the property is equal to the supply budget or price.

If the supply budget or price decrease a little, the score remains 100%.

If the supply budget or price decrease more, the score decrease with a S-shaped curve towards the 0 value.

If the supply budget or price is greater than the supply budget or price, the score decreases very quickly towards the 0 value.

The standard deviation measures the amount of variation or dispersion from the average.

The supply standard deviation for the budget criterion is inherent to the variation of the renovation cost.

The demand standard deviation of the budget or price criterion is inherent to the variation of the budget or price in the user experience.

There is no supply standard deviation for the price criterion.

The operation considers 2 cases:

- If the numerator decreases the average supply budget or price by the supply standard deviation, and the denominator increases the average demand budget or price by demand standard deviation, then the supply / demand ratio is moved to the left of the x axis.

- If the numerator increases the average supply budget or price by the supply standard deviation, and the denominator decreases the average demand budget or price by demand standard deviation, then the supply / demand ratio is moved to the right of the x axis

The minimum score provides the pessimistic case.

5) Location association

The supply user defines an address Address(s).

The demand user defines a geographic zone with an address Address(d) and a distance D.

The score operation to associate a Supply s and a Demand d with criterion i=location is a function of the distance D specified by the demand user and the distance measured between the supply and the demand address: Score(s,d, location)=Function(D, Distance (Address(s),Address(d)).

As shown in **FIG.17,** the score operation is a function **186** of the distance between the supply and demand addresses.

It has a S-shaped curve. It starts at 100% for a small distance because the supply and demand are inside the distance specified by the demand. Then it decreases slowly for a larger distance, and decrease quickly for a distance greater than the demand user specified distance D. It continues to decreases quickly and follows an asymptotic decrease around 0% for a very large distance.

The supply - demand criterion weight defines the weight of the criterion association for the demand user transaction decision.

If the demand value of criterion i is unknown, WTC(s,d,i)=0 because the demand has not estimated the criterion.

If criterion i is unrated, the Average Value for the demand expresses the value expected, but not a level of importance of the criterion. For example, one user needs a 80 $m^2$ apartment. Another wants a 100 $m^2$ house. A larger living size does not mean that the living size criterion is more important. Therefore the weight of an unrated criterion is independent of the demand expectation and WTC(s,d,i)=WTC(s,i).

If criterion i is rated, the Average Value for the demand expresses the level of importance of the criterion in a transaction decision. The impact of a rated criterion on the score is proportional with the demand Average Value and WTC(s,d,i)=WTC(s,i)*AVC(d,i).

It is very important to understand that the impact of rated criterion is self-regulated with the demand expectation discovered during the system experience. When the user considers that the rated criterion pleasant view is mandatory, he selects homes which present a pleasant view. The dynamic update of the demand profile discovers that this criterion has a high value. When the score system finds a new property with a high value for the pleasant view, the score for the criterion is high, and the weight for the criterion is high. The impact on the final score is high. If a home does not have a pleasant view, the negative impact on the final score is also high.

But when the user does not care about a nice view, the dynamic update of the demand profile discovers that this criterion has a low value. When the score system finds a new home with a nice view, the score of the criterion is 100% but the weight of the criterion is low and the impact on the final score is low.

It is the reason why the preferred embodiment contains as much rated demand criteria as possible.

The score for a supply - demand association evaluates the transaction probability between the specific property and the specific demand project. It compares different supply - demand associations using an unpredictable number of criteria in the supply and demand profile. It cannot use standard regression models which assume a fixed number of criteria called predictors.

Only the criteria score associations with known demand criteria values are considered.

If the supply value of criterion i is unknown, the demand value of criterion i is known and defined for the supply market segment, and the demand criteria is rated, the system set a default small AVC(s,i) value (i.e. 10%) for the score computation but WTC(s,d,i) is not 0. It happens when the supply user has not evaluated the criterion, but the demand user considers this criterion. The score for the criterion has a small value because the system does not know the supply value and it may be low. It penalizes the supply users who do not fulfill all the criteria for their market segment. It motivates the supply users to fulfill as many criteria as possible to improve the level of score for the supply demand associations.

If for one criterion association AVC(d,i)=0 (prohibited) and AVC(s,i)>0, Score(s,d)=0. For example, the demand prohibits the criterion "rustic style" and the supply style is rustic. The score is 0 and the property is not selected. The search algorithm uses this information in the pre-selection step **175** to eliminate the property.

Else, let n be the number of matching demand criteria associations.

The score for a supply - demand association is the weighted average of the sum of the criteria scores.

$$\text{Score(s,d)} = \frac{\sum_{i=1}^{n} \text{Score}(s,d,i) * \text{WTC}(s,d,i))}{\sum_{i=1}^{n} \text{WTC}(s,d,i))}.$$

Score(s,d) ranges between 0 and 1.

The scoring system dynamically adjust the transaction weights.

The dynamic adjustment of transaction weights applies for a specific market segment.

Let p be the maximum number of criteria associations.

The score for a supply demand association operation has p degrees of freedom. WTC(s,i)=WTC(i) which is adjusted over time by the dynamic weight algorithm.

By construct, we decide to normalize the sum of weights: $\sum_{i=1}^{p} WTC(i) = 1.$

When a transaction is signed, the system selects every listings viewed during a period of time, selected and bid with a higher score than the signed home and adjust the weights to minimize the Score Residual Sum of Squares. The system computes the sensitivity of the transaction weight to the total score Residual Sum of Squares.

Let ss be "supply signed index", so be "supply other index", and ds be "demand signed index".

For a large number L of transactions signed between pairs of ss and ds, and other selected supply properties so with SG(ss,so,ds)>threshold, the Score Mean Squared Error is

$$\text{SMSE} = \frac{1}{L} \sum_{ss,so,ds=1}^{L} (score(so,ds) - score(ss,ds))^2$$

The algorithm adjusts the transactions weights to minimize the Score Mean Squared Error SMSE as follow:

While some weight can be adjusted:

For every available criteria i, flag every criteria weight which decrease SMSE when WTC(i) is increased by 1%.
For every flagged criteria weight, increase WTC(i) by 1 %.
Normalize the sum of weights.

If the weight of a criterion arrives below a threshold, the system administrator may suppress the criterion for the score association in this market segment. The criterion may be reassigned for another market segment.

If a number of users in a market segment ask for a new criterion (with keyword input), the system administrator may add the criterion.

The profile confidence measures the capacity of the profile to provide an accurate score, price estimation, search linking or listing linking computation.

The supply criterion confidence estimates the level of confidence of the supply Average Value of the criterion AVC(s,i). It applies for subjective rated criteria.

Let n be the actual number of supply criteria and p be the maximum number of criteria.

The criterion confidence increases if there is a large number of profile update events, and the values of those events are converging. Therefore, the Criteria Confidence CC(s,i) operation of supply s criterion i is a function of the sum of the L available Weight of Events WET, and the Standard Deviation for the Criteria SDC.

$$CC(s,i)=Function(\sum_{x=1}^{L} WET(s,i,x,y) * (1 - \frac{SDC(s,i)}{AVC(s,i)})$$

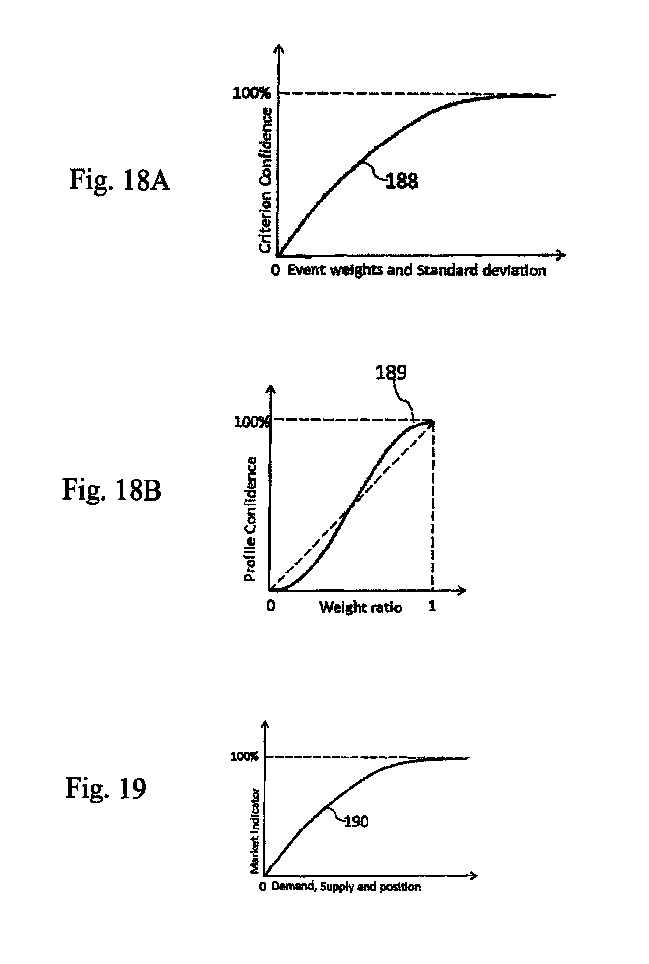

As shown in **FIG.18a,** the Criterion Confidence operation is a function **188** of the sum of the Weight of Events WET, and the Standard Deviation for the Criterion SDC.

If the sum of weights is 0 or the Standard Deviation is equal to the Average Value, x=0 and Criteria Confidence is 0. Then the Criteria Confidence increases linearly and reaches an asymptote towards 100% for a large number of update events, and a small Standard Deviation between those events.

The supply profile confidence is a public information displayed to any user who see the profile.

It is displayed to motivate the supply user to fulfill as many criteria as possible, and receive visit evaluations to offer a reliable profile.

The profile confidence increases when the supply profile has a large number of criteria with a high criteria confidence.

The supply property may address different market segments characterized by different type of properties and different lists of selection criteria.

Let n be the number of supply criteria based on supply profile, and p be the maximum number of criteria for the default market segment.

The Supply Profile Confidence PC(s) operation is a function of the weighted average of sum of the available Criteria Confidence, and the ratio between the sum of maximum criteria weight and the sum of actual criteria weight:

$$\text{Supply Profile Confidence PC(s)} = (\frac{\sum_{i=1}^{n} CC(s,i)*WTC(i)}{\sum_{i=1}^{n} WTC(i)}) * Function(\frac{\sum_{i=1}^{n} WTC(i)}{\sum_{i=1}^{p} WTC(i)})$$

As shown in **FIG.18b,** the second part of the Supply Profile Confidence operation is a function of the Ratio between the sum of maximum selection criteria weight and the sum of actual criteria weight.

If the supply user has fulfilled every selection criteria, the ratio is 1.

If the supply user has not fulfilled any criteria, the ratio is 0 and the supply profile confidence is 0.

The function **189** increases the confidence for a weight ratio close to 100% because there is a level of redundancy between criteria, and it decreases the confidence for a weight ratio close to 0% because the score does not make sense for a very small number of criteria.

The demand criterion confidence estimates the level of confidence of the demand Average Value of the criterion AVC(d,i).

The demand criterion confidence uses the same principles as the supply criterion confidence. Therefore

$$CC(d,i)=Function(\sum_{x=1}^{L} WET(d,i,x,y) * (1 - \frac{SDC(d,i)}{AVC(d,i)})$$

The demand profile confidence is a private information displayed to the demand user.

It is displayed to motivate the demand user to experience the system and get a more accurate score evaluation.

The profile confidence increases when the demand user experiences the application, with converged searches, property selections, property visited or bid.

The demand profile confidence uses the same principles as the supply profile confidence. Therefore

$$\text{Demand Profile Confidence PC(d)} = \left(\frac{\sum_{i=1}^{n} \text{CC(d,i)} * \text{WTC(i)}}{\sum_{i=1}^{n} \text{WTC(i)}}\right) * \text{Function}\left(\frac{\sum_{i=1}^{n} \text{WTC(i)}}{\sum_{i=1}^{p} \text{WTC(i)}}\right)$$

The score system offers additional services to the supply user to <u>estimate the market demand</u> for his property.

The objective of the market demand evaluation is to leverage the demand profile data base to provide alerts and a market indicator to the supply user when he wants, specifically when he publishes his profile, and when he wants to adjust his price. He does not need to wait that new demand users searches for his property and contact him.

The system performs a reverse search from the supply profile to the demand data base. It scans the complete demand profile **101** database accessible in the profile scope to select an ordered list of potential demand projects and a score for the supply demand association. This information may be provided to an agent, or to the supply user. The demand user does not need to search for the property.

The system provides a <u>focused advertisement</u> to alert the demand users who may be interested by a property and get a feedback on potential prospects.

Focused advertisement is triggered when the supply user publishes his listing in a new domain, when he adjusts his price, or when he wants to speed up a transaction after a period of time.

The alert is sent to the demand user. It may be a message in the social network, a popup when the demand user connects to the system or an email. The alert is also sent to the optional demand agent and to the supply agent for them to arrange a visit.

The supply user receives a report with the scores of the reverse search, and the associated profile confidences. It is a very useful information for the supply user to estimate the market traction for his property. The report does not specify the contacts of the demand users since the demand users are alerted and they have the possibility to contact the supply user.

The <u>Market Indicator</u> evaluates the balance of power between the demand projects, the properties, and the positioning of his property among other supply properties. It ranges between 0 and 1.

For a supply property, if there is at least 1 demand project exceeding the score threshold, and reachable during a period of time, the system computes:

- The Number of Similar Supply properties including the property $\text{NSS(s)} \in [1, \infty[$
- The Number of Demand Projects with a score greater than an alert score level $\text{NDP(s)} \in [1, \infty[$
- The Supply Score Position Median in the list of a maximum of 3 demand projects with the highest score for the supply $\text{SPM(s)} \in [1, 3]$

The Market Indicator MI(s) operation is a function of those 3 variables: Supply (NSS(s)), Demand NDP(s), and Supply Position SPM(s):

$$\text{MI(s)= Function}\left(\frac{NDP(s)}{NSS(s) * SPM(s)}\right)$$

The Market Indicator is high if the demand is higher than the supply. Therefore the expression computes the demand / supply ratio.

If the supply is rare, and there is at least one demand, the supply position for the potential demand becomes an important criterion. If this position has a high value, the supply is not in a good position to sell, and the Market Indicator decreases. However, if the supply is in the first position, for a maximum of 3 demand projects with the highest score, the Market Indicator increases. Therefore the supply score position median is in the denominator of the expression.

If the supply is important, there is a high probability that supply score position Median SPM(s) is close to 1, and it has a minimum impact on the result of the expression.

As shown in **FIG.19,** the Market Indicator operation is a function **190** of the Supply (NSS(s)), the Demand NDP(s), and the Supply Position SPM(s). It starts at 0 for a small ratio because there is no demand, or the demand is much lower than the offer and the supply is not in a good position compared to the other supply offers. Then it increases linearly for a larger ratio and follows an asymptotic increase around 100% for a very large ratio.

To improve usability, the system displays a simplified view of the Market Indicator in 3 classes:

- Excellent: $\text{MI} \in [60\% - 100\%]$. The supply is in an excellent position.
- Neutral: MI [30% - 60%[. The supply is in a good position in the market segment.
- Poor: $\text{MI} \in [0\% - 30\%[$. The supply is in a poor position in the market segment.

The system estimates a Time of Transaction which is the time between the publication of the profile, and the time to sign a transaction at the estimated price minus a reasonable trading rate.

The Estimated Time of Transaction ETT(s) operation is a function of the 3 variables used to evaluate the Market Indicator: Supply (NSS(s)), Demand NDP(s), and Supply Position SPM(s):

$$ETT(s)= Function(\frac{NDP(s)}{NSS(s)*SPM(s)})$$

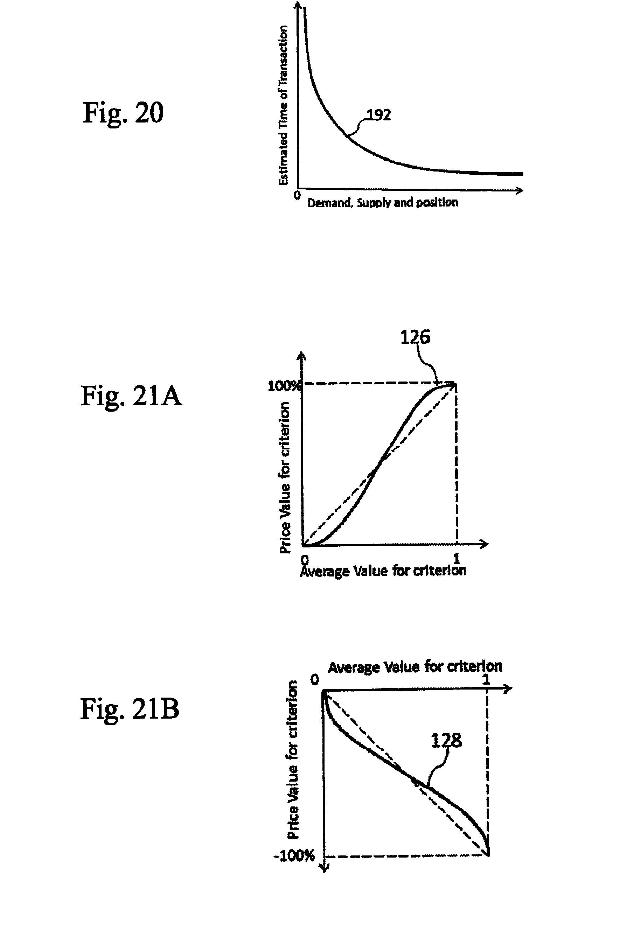

As shown in **FIG.20,** the Estimated Time of Transaction operation is a function **192** of the Supply (NSS(s)), the Demand NDP(s), and the Supply Position SPM(s). It starts as an asymptote at∞ (undefined time) for a small ratio because there is no demand, or the demand is much lower than the offer and the supply is not in a good position compared to the other supply offers. Then it decreases for a larger ratio and follows an asymptotic decrease around a small time for a very large ratio.

Some real estate sites estimate the price of a property with a lookup in an external database **108** which provides the price per $m^2$ or square foot in the location. However, the values of every criteria in the implicit supply profile have an influence on the price of the property. It is the reason why the system leverages the values of the implicit profile criteria to evaluate the price of the property per transaction mode. The estimation of the property market price is a very important information for the supply user. The user who propose a low price may lose a lot of money. A user who propose a high price does not find any buyer and may lose a lot of time.

The more criteria and parameters are fulfilled, the more accurate is the pricing estimation. It motivates the supply user to fulfill as much criteria and parameters as possible, as early as possible. Since the same criteria are used for scoring, it contributes to the scoring accuracy.

The pricing estimation is a value added service provided by the system to advise the supply user.

However, it is the responsibility of the supply user to decide the price that he wants to publish.

The system assigns a price value PVC(s,i) to each selection criterion, and defines an operation to convert the Average Value for the criterion AVC(s,i) into a Price Value for the same criterion PVC(s,i) as follow:

1) If the criterion has no impact on the price:

$$PVC(s,i)=0.$$

2) If the price impact of the rated or Boolean criterion is always positive for any criteria value:

$$PVC(s,i)=function(AVC(s,i)) \in [0,+1].$$

It applies for garden, pool, terrace, garage, cellar, nice floor, near city center, near nature, near public transports, near schools, near amenities, near site of interest, architect.

As shown in **FIG.21a,** the Price Value is a function **126** of the Average Value for the criterion.

The function is close to PVC(s,i)=AVC(s,i) for an average value between 0 and 1.

The price impact is 0 for an average value of 0 because the lowest level of fulfillment of this criterion has the minimum price impact. The price impact is 1 for an average value of 1 because the highest level of fulfillment of this criterion has the maximum price impact.

The function decreases the price impact for an average value close to 0 because the price impact is negligible for a low level of fulfillment of the criterion, and increases the price for an average value close to 1 because the price impact is maximum for a high level of fulfillment of the criterion.

3) If the price impact of the rated criterion is always negative for any criteria value:

$$PVC(s,i)=function(AVC(s,i)) \in [-1, 0].$$

It applies for renovation needed or affordable area.

As shown in **FIG.21b,** the Price Value is a function **128** of the Average Value for the criterion.

The function is close to PVC(s,i)=-AVC(s,i) for an average value between 0 and 1.

The price impact is 0 for an average value of 0 because the lowest level of fulfillment of this criterion has the minimum price impact. The price impact is -1 for an average value of 1 because the highest level of fulfillment of this criterion has the maximum negative price impact.

The function decreases the price for an average value close to 0 because the price impact is negligible for a low level of fulfillment of the criterion, and increases the price for an average value close to 1 because the negative price impact is maximum for a high level of fulfillment of the criterion.

4) If the price impact of the rated criterion is negative when the average value is low and positive when the Average value is high:

$$PVC(s,i)=function(AVC(s,i)) \in [-1,+1].$$

It applies for low charges, new property, turnkey, energy saving, potential yield, low budget per m$^2$ ratio, parking, prime area, quality, quiet, pleasant view, pleasant orientation, home safety, senior friendly, children friendly.

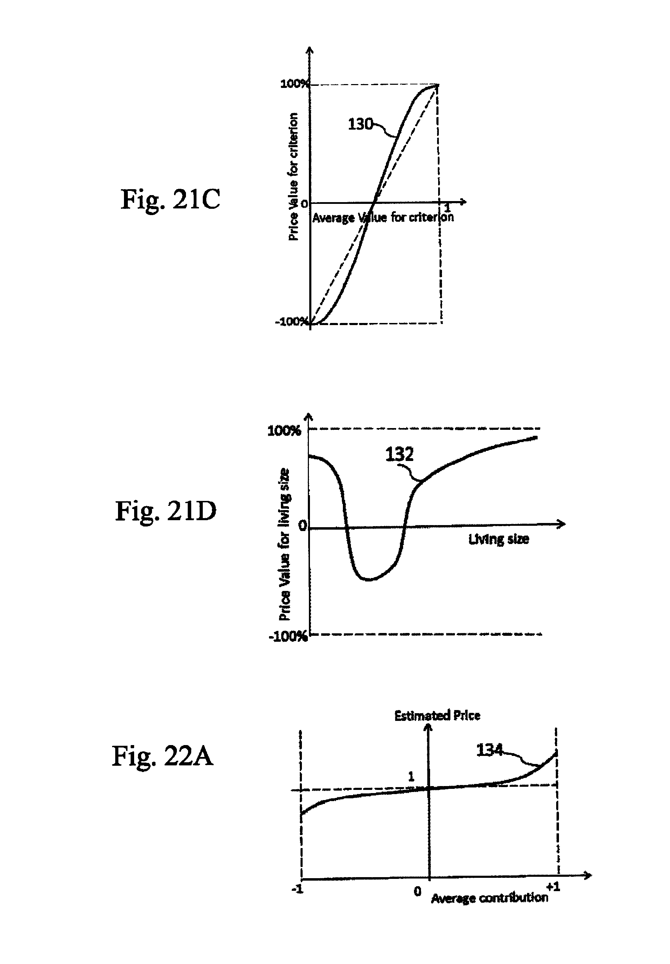

As shown in **FIG.21c,** the Price Value is a function **130** of the Average Value for the criterion.

The function is close to $PVC(s,i)=2*AVC(s,i)-1$ for an average value between 0 and 1.

The price impact is -1 for an average value of 0 because the lowest level of fulfillment of this criterion has the maximum negative price impact. The price impact is +1 for an average value of 1 because the highest level of fulfillment of this criterion has the maximum positive price impact.

The function decreases the price for an average value close to 0 because the negative price impact is maximum for a low level of fulfillment of the criterion, and increases the price for an average value close to 1 because the positive price impact is maximum for a high level of fulfillment of the criterion.

5) The pricing operation for living size criterion is a function of the living size.

As shown in **FIG.21d,** the pricing operation is a function **132** of the living size. This function starts at a fairly high level because a small property size is usually very well equipped and has a high price per m$^2$ or square foot. Then this function decreases for an average living size because the majority of demand users is looking for this size at a reasonable price. Then the function increases for a larger living size which fits for users with a high purchasing power.

WPC(i) is the Weight on the Price of the Criterion i.

p = maximum number of price criteria: $\sum_{i=1}^{p} WPC(i) = 1$

n= number of available price criteria

There are 2 different impacts of the criteria on the property price:

1) The Average Contribution of criteria on the price

Some criteria have a positive impact, others have a negative impact. The <u>average contribution on price ACP(s)</u> is the weighted average of the sum of price criteria values:

$$ACP(s)=(\frac{\sum_{i=1}^{n} PVC(s,i)*WPC(i)}{\sum_{i=1}^{n} WPC(i)}) \in [-1,+1]$$

The criterion price values range between -1 and +1. The contribution of criterion on the price also ranges between -1 and +1.

2) Major nuisances or defects

have also a negative impact on the price even if the other criteria have a positive impact.

<u>The Contribution of Defect criteria on Price</u> applies for the criteria with a negative impact. The impact is proportional with the weighted average of the sum of the square of the Price Value for the Criteria PVC(s,i). The square operation provides a multiplied impact on the criteria with a very large nuisance. For the m rated criteria with PVC(s,i) < 0:

$$\text{CDP(s)}=\left(\frac{\sum_{i=1}^{m} \text{PVC}(s,i)^2 * \text{WPC}(i)}{\sum_{i=1}^{n} \text{WPC}(i)}\right) \in [0,+1]$$

The estimated Price for a supply property s EP(s) is a function of the price per m$^2$ or square foot in the location, the living size, the renovation cost, the trading rate, the average contribution of the criteria, the contribution of defect criteria, and the Market Indicator. EP(s)=(price_per_m2_in_location*Living_size*Trading_Rate*Function(ACP(s))*Function(CDP(s)*Function(MI(s))-Renovation_cost.

The price per m2 or square foot in location is the official price published in external data bases **108** for the transaction mode.

The trading rate is the deviation between the price in the supply profile and the real transaction price. The system keeps track of the trading rates when a transaction is signed and store the history of trading rates. It applies the average trading rate for the market segment and the price range.

The estimation of the renovation cost has been described above in this document.

As shown in **FIG.22a**, the estimated price operation is a function **134** of the average contribution of the criteria.

This function starts for x=-1 with a value smaller than 1 because it decreases the estimated price if only criteria with negative impact are fulfilled at 100%. Then it increases quickly to reach the 1 value for x=0. At this point, this function does not change the estimated price. Then it increases more for x approaching +1 because it increases the estimated price of fantastic properties with very high values of criteria with positive impact.

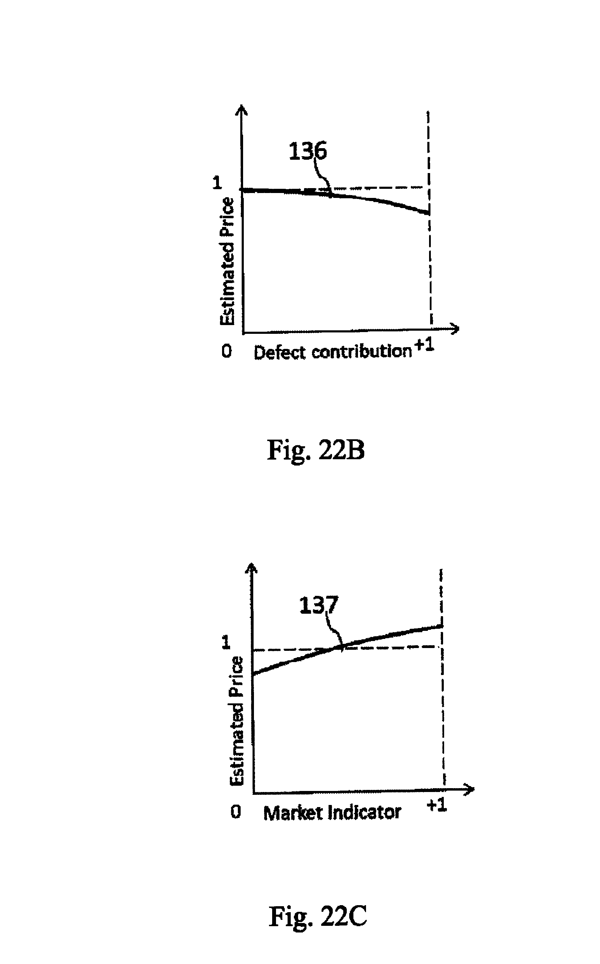

As shown in **FIG.22b**, the estimated price is also function **136** of the contribution of defect criteria.

This function starts for x=0 with a value of 1 because the impact of defect criteria is negligible.

It decreases slowly for a small values of x. Then it decreases more for x approaching +1 because it decreases the estimated price of properties with large nuisance or defects.

As shown in **FIG.22C,** the estimated price is also function **137** of the Market Indicator.

This function starts for x=0 with a value smaller than 1 because a low Market Indicator has a negative impact on the estimated price. Then it increases to reach a value of 1 for an average value of Market Indicator. At this point, this function does not change the estimated price. Then it continues to increase for x approaching +1 with a value greater than 1 because a high Market Indicator has a positive impact on the estimated price.

Notice that the estimation of the Market Indicator requires a minimum number of supply and demand profiles in the location for the market segment. If it is not the case, the Market Indicator is not used in the price estimation.

The scoring system dynamically adjusts the price weights for each market segment.

Let p be the maximum number of price criteria

By construct, we decide to normalize the sum of weights when weights are updated:

$$\sum_{i=1}^{p} WPC(i) = 1$$

The price algorithm has p degrees of freedom.

When a transaction is signed, the system compares the price of the transaction signed with the estimated price. The system computes the sensitivity of the price to weight adjustments.

Let SP(s) be the Signed Price for supply s and EP(s) the evaluated Price for supply s

For a large number L of transactions signed, the Price Mean Squared Error is

$$\text{PMSE} = \frac{1}{L}\sum_{S=1}^{L} (\text{SP(s)-EP(s)})^2$$

The algorithm adjusts the price weights to minimize the Price Mean Squared Error PMSE as follow:

While some weight can be adjusted:

For every available criteria i, flag every criteria weight which decrease PMSE when WPC(i) is increased by 1%.
For every flagged criteria weight, increase WPC(i) by 1 %.
Normalize the sum of weights.

The scoring system dynamically adjusts the system functions described in this document. It applies for a specific market segment and the following functions: renovation cost, low charges, new property, pricing value for a living size, contribution of criteria on price, scoring operation for rated - rated criterion, for numeric - numeric criterion, for budget or price criterion, for location criterion, profile confidence, market indicator, estimated time of transaction.

For a large number of transactions signed, the system compares the estimated value of the function with the actual values provided by the user or stored in the system, and adjust the function to minimize the Mean Squared Error MSE.

Here is an example for the estimated time of transaction.

When a property transaction is signed, the system stores the associated Estimated Time of Transaction, and the actual time between the publication and the transaction.

For a large number L of transactions signed at a price close to the estimated price minus a reasonable trading rate, the system computes the Average Actual Time of Transaction AATT(s). It adjusts the Estimated Time of Transaction ETT(s) function to minimize the Mean Squared Error MSE for the set of transactions.

The same method applies for the other functions.

The best mode described above achieves a new and powerful scoring system for real estate search engine.

The system builds a supply database containing supply profiles for sellers or landlords called supply users, and a demand database containing demand profiles for buyers or renters called demand users.

It estimates the conscious and unconscious needs and wishes of the demand user for a project, and a transaction probability for each supply demand association.

When the supply user wants to sell or rent a property, he set a supply profile containing objective and subjective selection criteria. He uses a graphical interface to drag and drop photos or names of subjective criteria in regions associated to a class which rates the level of fulfillment of the criteria. He get a profile confidence which increases with the number of evaluations from agents and demand users.

He get a market demand evaluation and an estimation of a time of transaction.

He get a price estimation computed with an average price per $m^2$ or square feet in the location and the characteristics of his property evaluated in his profile, and the value of the market demand evaluation.

He initiates focused advertisement to alert demand user and agents with a scoring association above a level.

When the demand user wants to buy or rent a property, he experiences the system to search for properties, look at listings, select listings, visit and evaluate properties, bid properties, and finalize a transaction. This user experience creates a dynamic demand profile built with search parameters and selection criteria inherited from the supply profiles of interest. He get a profile confidence which increases with the user experience for converged searches. He uses a graphical interface to see the class of subjective criteria estimated by the system which measure the level of expectation for the criteria. If he does not agree with the system estimations, he modifies the value of those criteria with a drag and drop mechanism.

When he searches for a property, the system computes a score for each supply demand association and selects an ordered list of properties, and their associated profiles and listings. The score algorithm uses Boolean and fuzzy logic with an unpredictable number of criteria in the supply and demand profile.

He receives alerts when a property offers a scoring association above a level.

When a partner real estate agent wants to offer differentiated value added services, he can control the access of his customer profiles in private or public domains to organize private sales previews.


### III . Advantages of the present invention

The embodiments of the invention which was described in detail above, provide the following significant advantages:

1. There is achieved a scoring system for real estate search engine using Boolean and fuzzy logic, generating a score indicative of a transaction probability between the supply property and the demand project for a specific market segment, quantifying the characteristics of a supply property and a demand project needs and wishes with a set of objective and subjective selection criteria stored in a supply and demand profile.

2. There is achieved a demand profile learning loop initiated by the demand user interest for some properties, characterized by his navigation experience, which in return inherit and dynamically derive supply profile values of those properties in the demand profile which becomes more accurate. This refined profile improves the score and search accuracy to select properties which meet better and better the demand user needs.

3. There is made possible to define selection criteria divided in categories including finance, layout, style, location and welfare factors, adapted to address specific market segments associated to a geography, a property type and a transaction mode. The score compares different supply demand associations using an unpredictable number of criteria in the supply and demand profile.

4. Dynamic demand criteria are created to formalize the level of importance of unrated criteria dynamically derived from the supply profiles of interest.

5. The score operations comprising the steps of

- Defining an association tactic to address a market segment, said association tactic is a set of supply and demand criteria associations.
- Supply demand criterion associations operation measuring the level of satisfaction of the demand expectation with the supply fulfillment for a transaction decision. The score operations apply for different type of criteria associations: rated supply and rated demand criterion association, Boolean supply and rated demand criterion association, numeric supply and numeric demand criterion association, budget or price association, location association.
- Supply demand association operation deriving the criteria score values to provide a global score representative of the transaction probability between the supply and the demand user.

6. There is achieved the definition of the management of profiles in order to associate a single supply profile to a supply property and associate a single demand profile to a demand project even if the user signs multiple contracts with multiple agents and publishes multiple listings. It enables agents to offer differentiated value added services associated to a single coherent profile.

7. A profile scope may be defined for enabling agents to reserve a customer property or project in a private domain during a period of time, and an access scope to give access to a specific level of a private domain during a period of time.

8. The supply profile can be continuously updated with events such as supply evaluations, agent evaluations, listing analysis, demand feedbacks, and external data base information, to compute an evaluation which is as close as possible to the characteristics of the property.

9. The described embodiment adjusts the supply events criteria values for each class of events to compensate the optimistic bias of the supply and pessimistic bias of the demand evaluations.

10. Quite advantageously, the demand project needs and wishes are automatically discovered, inherited from the profile characteristics of the properties searched, selected, evaluated and bid.

11. Criteria are correlated to simplify the number of criteria for a market segment, and speed up the convergence of the demand profile.

12. Pseudo properties are defined for unsubscribed supply users, and pseudo projects for demand users without projects.

13. New searches of pseudo projects may be linked with previous pseudo projects characterized by the lowest profile deviation below a threshold to improve the search selection.

14. New listing published in any listing site may be linked with a property and its supply profile characterized by the lowest profile deviation below a threshold.

15. Users may be presented comprehensive values of criteria through an explicit profile which maps rated criteria into classes.

16. A class can be assigned to a criterion with a drags and drop mechanism with the name or a photo of the criterion inside a user interface geographical form identifying the criterion class.

17. One or more supply profile can be controlled with a property name, an alert score level, a publishing date, a transaction status and an option to freeze the explicit profile.

18. One or more demand profile can be controlled with a project name, an alert score level, an alert date, a transaction status and an option to freeze the explicit profile and the user modified parameters.

19. A supply and demand profile confidence can be displayed which is representative of the capacity of the profile to compute an accurate score value.

20. The Supply user can be provided the number of demand user evaluations, the number of demand users who have selected the property, and the number of demand projects matching the score level.

21. A transaction criterion weight can be computed for a subjective criterion proportional with the demand value of the criterion which self regulates the impact of the criterion with the demand expectation.

22. An ordered list of properties exceeding a score level can be selected and displayed to a user demand.

23. The described embodiment provide focused advertisement with a search for demand projects in the demand profile database to alert the demand users and the agents with selected supply properties and get a feedback on potential prospects.

24. There is computed a market indicator which evaluates the balance of power between his property, the demand projects, the supply properties, and the positioning of his property among other supply properties at a given time. This indicator is used to evaluate a time of transaction.

25. A price is estimated with the average price per $m^2$ or square foot in the location, the characteristics of the property formalized in the supply profile, and the Market Indicator. The positive and negative impacts on the price of the selection criteria are evaluated. The estimated price takes into account the average impacts of the selection criteria, and the impact of major nuisances or defect.

26. The pricing criteria weights are updated so as to improve the pricing algorithm accuracy over time.

27. The transaction criteria weights are updated so as to improve the scoring algorithm accuracy over time.

28. The criteria deviation weights are updated so as to improve the search linking and the listing linking algorithm accuracy over time.

29. The system functions are dynamically adjusted to improve the accuracy of the algorithms over time.

At last, it should be noticed that the invention may be used independently of the context of a real estate properties and that the same process may be used for any kind of web server proposing transaction between a supplier of goods/services and a possible purchaser of the same.

## Claims

1. Process for computing a score for a search engine of a web server accessing to at least one database (108) of real estate properties offered for sale or for rent, said at least one database comprising a first database of properties offered for sale or for rent and a second database of users, said users surfing through said web server for the purpose of obtaining a list of properties extracted from said database (108);
said process involves the steps of:

- generating a **demand** profile dedicated to a possible user or property purchaser, said demand profile comprising a first explicit demand profile and a second implicit demand profile;

said first explicit demand profile comprising data input by the property purchaser or user through a user interface, said data including classified data corresponding to n classes, wherein n is an integer comprised between [2, 10], to be assigned to a set of criteria describing a particular property;
said second implicit demand profile comprising data including rated data corresponding to ratings or soft values to be assigned to each of said criteria, said soft values being iteratively updated from data generated from the user's navigation;

- generating a **supply** profile dedicated to a property which is offered for sale, or rent, said supply profile comprising a first explicit supply profile and a second implicit supply profile;

said first <u>explicit</u> supply profile comprising data input by the property owner, said data including classified data corresponding to said m classes wherein m is an integer comprised between [2, 10];

said second <u>implicit</u> supply profile comprising data including rated data corresponding to ratings or soft values to be assigned to each of said criteria, said soft values being iteratively updated from data received from evaluations;

- generating a score between a particular implicit demand profile and a particular implicit supply profile indicative of the probability of a possible transaction between a possible purchaser and a property owner.

2. Process according to claim 1, **characterized in that** said first explicit demand profile and said second explicit supply profile are populated with data generated by a graphical user interface providing a set of criteria which can be classified in different categories by the user.

3. Process according to claim 2 wherein said graphical user interface involves the step of:

- providing a set of photos or icons, wherein each photo or icon is dedicated to one particular criterion,
- providing a set of n areas or zones, wherein each area or zone is dedicated to one particular class among said n classes; wherein the user may drag and drop each photo or icon in one particular area so as to assign the corresponding class to said criterion

4. Process according to claim 3 **characterized in that** said score is used for the purpose of performing an estimation of the time for achieving a transaction.

5. Process according to anyone of claims 1 to 4 wherein said classes are automatically updated in accordance with the update of the corresponding soft values.

6. Process according to claim 5 wherein at least one class assigned to one particular criterion can be subject of a freeze by said user, independently of the continuous update of the corresponding rating or soft value.

7. Process according to anyone of claims 1 to 6 comprising the steps of:

- defining an association tactic to address a market segment, said association tactic is a set of supply and demand criteria associations;
- computing for each criterion an intermediate score value from the soft values stored within the two implicit demand and supply profiles;
- deriving from said intermediate scores value a global score value which is representative of the probability of a transaction between the user and the property owner.

8. Process according to anyone of claims 1 to 7 wherein said process establishes the score corresponding to a list of properties loaded within said first database, and then displays a list of results of the properties having the higher scores.

9. Process according to anyone of claims 1 to 8, wherein the criteria of the supply profiles are used for estimating a price taking into account of the ratings stored into the implicit supply profile.

10. Process according to anyone of claims 1 to 8, wherein said demand profile is a pseudo demand profile being automatically generated for a user having not registered any particular project profile.

11. Process according to anyone of claims 1 to 8, wherein said supply profile is a pseudo supply profile being used to use for linking new listing published in any listing site with a particular property and its supply profile.

12. Process according to anyone of claims 1 to 8, further involving the computation of a level of profile confidence being representative of the capacity of the supply profile or demand profile to generate an accurate score estimation.

13. Process according to anyone of claims 1 to 8, wherein said supply profile or demand profile is accessed in a private or public domain.

14. Process for generating a demand profile learning loop for a search engine of a web server accessing at least one database (108) of products or services offered for sale or for rent, said at least one database comprising a first database of products or services and a second database of users, said users surfing through a web server for the purpose of obtaining a list of products or services extracted from said database (108);
said process involves the steps of:

- generating a supply profile dedicated to a product or service which is offered for sale or rent comprising of data to be assigned to a set of selection criteria for transaction, describing a particular product or service;
- generating a demand profile dedicated to possible user or product purchaser comprising data to be assigned to a set of selection criteria for transaction, describing the expectation for a particular product or service;
- providing to the user a prioritized list of products or services listings ordered from the level of matching between the supply and the demand profile;
- estimating a level of interest for the products or services viewed or selected by the user's navigation;
- dynamically deriving the values of the demand profile data from the values of the supply profile data.

**15.** A web server comprising means for performing the process defined in anyone of claims 1 to 14.

**16.** A computer program product comprising a computer readable medium, having thereon a computer program comprising program instructions, the computer program being loadable into a data-processing unit and adapted to cause execution of the method according to any of claims 1 to 14 when the computer program is run by the data-processing unit.

**Fig.1A**

**Fig.1B**

Fig.2

Fig.3A

```
                    ┌─────────────────────┐
                    │       Start         │───60
                    └─────────────────────┘
                              │
                              ▼
                    ┌─────────────────────┐
                    │     Subscribe       │───61
                    └─────────────────────┘
                              │
                              ▼
                    ┌─────────────────────┐
                    │   Project creation  │───62
                    └─────────────────────┘
                              │
                              ▼
                    ┌─────────────────────┐
                    │     Experience      │───63
                    └─────────────────────┘
                              │
                              ▼
                    ┌─────────────────────┐
                    │    Close project    │───64
                    └─────────────────────┘
                              │
                              ▼
                    ┌─────────────────────┐
                    │     Unsubscribe     │───65
                    └─────────────────────┘
                              │
                              ▼
                    ┌─────────────────────┐
                    │        end          │───66
                    └─────────────────────┘
```

## Fig.3B

70 — Profile factors and criteria

| 71 Finance | 72 Layout | 73 Style | 74 location | 75 Welfare |
|---|---|---|---|---|
| Budget or price | Living size | Modern | location | Quality |
| Property type | Lot size | Classic | Near city center | Quiet |
| Low charges | Rooms | Regional | Near nature | Pleasant view |
| new property | Bedrooms | Rustic | Near public transports | Pleasant orientation |
| Turnkey | Bathrooms | Architect | Near schools | Nice floor |
| Renovation | Garden | | Near amenities | Home safety |
| Energy saving | Pool | | Near site of interest | Senior friendly |
| Potential yield | Terrace | | Prime area | Children friendly |
| Low budget per m² ratio | Parking | | Affordable area | |
| | Garage | | | |
| | Cellar | | | |

## Fig. 4

76

| Supply profile Management |
|---|
| Bob.antibes |
|  |

| Manager ID | Scope | Access | Listing |
|---|---|---|---|
| Agent_A | Domain_A1 | Public and Domain_A2 | Bob.agentA |
| Agent_B | Public | Public and Domain_B2 | Bob.agentB |
| Unknown | Public | Not applicable | Listing123 |

77

| Demand profile Management |
|---|
| Alice.antibes |
|  |

| Manager ID | Scope | Access |
|---|---|---|
| Alice | Public | Public |
| Agent C | Domain_C1 | Public and Domain_C2 |

## Fig. 5

80

## Fig. 6A

| Explicit supply profile unrated criteria and parameters | |
|---|---|
| Name | Value |
| Property type | house |
| Price | 400 000 |
| Annual charges | Unknown |
| Last renovation date | 2004 |
| Year built | 1992 |
| Living size | 120 |
| Lot size | 500 |
| Address | 25 route de Nice, 06600 Antibes |
| All beds | 3 |
| Rooms | 5 |
| All baths | 2 |
| Garden | yes |
| Pool | no |
| terrace | yes |
| Parking | 2 |
| Garage | 1 |
| Cellar | yes |
| keywords | Tennis court |

82 — Explicit supply profile rated criteria

**Excellent**

83 | Children friendly | Modern |

**Good**

84 | Quality | Quiet | Prime area | Near public transports | Turnkey |

**Average**

85 | Pleasant orientation | Home Safety | Pleasant view | Near amenities | Potential yield |

**Poor**

86 | Senior friendly | Energy saving | Renovation needed | Near nature | Near city center | Affordable area |

**Not applicable**

87 | Near site of interest | Nice floor | Classic | Rustic | Architect | Regional |

## Fig. 6B

88

| Explicit supply profile control | |
|---|---|
| **Name** | **Value** |
| Property | Antibes |
| Transaction mode | Sell |
| Freeze profile | no |
| Alert score level | 0.70 |
| Publishing date | 01/06/2015 |
| Transaction status | publish |

## Fig. 6C

89

| Supply profile evaluation | |
|---|---|
| **Name** | **Value** |
| Profile confidence | 0.63 |
| N° of evaluations | 3 |
| N° of selections | 10 |
| N° of match | 20 |

| Supply profile update types | Weight |
|---|---|
| Listing | W-LI(i) |
| Data Base | W-DB(i) |
| Visit Evaluation | W-VE(i) |
| Explicit supply user update | W-EU(i) |
| Explicit supply agent update | W-EA(i) |

**Fig. 7**

**Fig. 8**

**Fig. 9**

**Fig. 10**

140

| Explicit demand profile unrated criteria and parameters ||
|---|---|
| Name | Value |
| Property type | house |
| budget | 430 000 |
| Living size | 130 |
| Lot size | 1000 |
| Address | Place de Gaulle, 06600 Antibes |
| Distance | 10 000 |
| All beds | 3+ |
| Rooms | unknown |
| All baths | 2+ |
| keywords | |

## Fig. 11A

142 — Explicit demand profile rated criteria

143 — Mandatory

Children friendly | Garden | Near amenities

144 — Important

Quality | Quiet | Prime area | Near public transports | Modern | Pool | Terrace

Low charges

Pleasant orientation | Home Safety | Pleasant view | Potential yield | 2 parkings | Turnkey

145 — Do not care

Senior friendly | Energy saving | Near nature | Near city center

new property | Low budget per m² ratio | Near site of interest

Nice floor | Classic | Architect | Regional | garage

Prohibited

Affordable area — 146

Renovation needed | Rustic

## Fig. 11B

148

| Explicit demand profile control | |
|---|---|
| Name | Value |
| Project | Home_of_dream1 |
| Transaction mode | buy |
| Freeze profile | no |
| Freeze user modified parameter | yes |
| Alert score level | 0.70 |
| Alert date | 01/07/2015 |
| Transaction status | bid Bob.Antibes |

149

| Demand profile evaluation | |
|---|---|
| Name | Value |
| Profile confidence | 0.55 |
| N° of match | 20 |

## Fig. 11C

160                    161

| Demand profile update types | Weight |
|---|---|
| Property displayed by a search | W-LD |
| Listing viewed during at least a period of time | W-LV |
| Property selected by the user | W-LS |
| Property visited and reviewed with a feedback | W-HV |
| Property bid | W-HC |
| Explicit Demand User update | W-ED |

## Fig. 12

| Project creation | 62 |

↓

| Explicit profile set | 171 |

↓

| Search trigger | 172 |

↓

| pseudo project linking | 173 |

↓

| Implicit profile update | 174 |

↓

| Property pre-selection | 175 |

↓

| Score association | 176 |

↓

| Final property selection | 177 |

↓

| Display results: listings, scores, profile confidence | 178 |

Fig. 13

Fig. 14

Fig. 15

Fig. 16

Fig. 17

Fig. 18A

Fig. 18B

Fig. 19

Fig. 20

Fig. 21A

Fig. 21B

Fig. 21C

Fig. 21D

Fig. 22A

Fig. 22B

Fig. 22C

Europäisches
Patentamt

European
Patent Office

Office européen
des brevets

# EUROPEAN SEARCH REPORT

Application Number

EP 15 15 4930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/289070 A1 (COPLEY BRYAN K [US]) 25 September 2014 (2014-09-25) * abstract * * paragraph [0021] - paragraph [0023]; figure 2 * * paragraph [0029] - paragraph [0032]; figure 3 * | 1-16 | INV. G06F17/30 G06Q50/16 |
| A | US 2014/358943 A1 (RAYMOND LEONARD G [US] ET AL) 4 December 2014 (2014-12-04) * paragraph [0159] - paragraph [0163]; figure 1 * * paragraph [0175] - paragraph [0177]; figure 3 * | 1,14-16 | |
| A | SHEARIN S ET AL: "Intelligent profiling by example", INTERNATIONAL CONFERENCE ON INTELLIGENT USER INTERFACES, IUI 2001, 14 January 2001 (2001-01-14), - 17 January 2001 (2001-01-17), pages 145-151, XP002742314, ASSOCIATION FOR COMPUTING MACHINERY, US * page 145, right-hand column - page 147, right-hand column * | 1,14-16 | TECHNICAL FIELDS SEARCHED (IPC) G06F G06Q |

The present search report has been drawn up for all claims

| Place of search | Date of completion of the search | Examiner |
|---|---|---|
| Berlin | 15 July 2015 | Polzer, Andreas |

EPO FORM 1503 03.82 (P04C01)

**ANNEX TO THE EUROPEAN SEARCH REPORT
ON EUROPEAN PATENT APPLICATION NO.**                    EP 15 15 4930

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2015

| Patent document cited in search report | Publication date | Patent family member(s) | Publication date |
|---|---|---|---|
| US 2014289070 A1 | 25-09-2014 | NONE | |
| US 2014358943 A1 | 04-12-2014 | NONE | |

EPO FORM P0459

For more details about this annex : see Official Journal of the European Patent Office, No. 12/82